(19) Europäisches Patentamt
European Patent Office
Office européen des brevets

(11) **EP 4 340 337 A1**

(12) **EUROPEAN PATENT APPLICATION**
published in accordance with Art. 153(4) EPC

(43) Date of publication:
**20.03.2024 Bulletin 2024/12**

(21) Application number: **22856091.8**

(22) Date of filing: **02.08.2022**

(51) International Patent Classification (IPC):
**H04M 1/02** *(2006.01)*      **G02B 1/11** *(2015.01)*
**G02B 7/02** *(2021.01)*

(52) Cooperative Patent Classification (CPC):
**G02B 1/11; G02B 7/02; H04M 1/02; H04N 23/00**

(86) International application number:
**PCT/KR2022/011387**

(87) International publication number:
**WO 2023/018092 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021 KR 20210106224**

(71) Applicant: **Samsung Electronics Co., Ltd.
Suwon-si, Gyeonggi-do 16677 (KR)**

(72) Inventors:
• **LEE, Jeongyeol
Suwon-si Gyeonggi-do 16677 (KR)**
• **KIM, Seungyong
Suwon-si Gyeonggi-do 16677 (KR)**

(74) Representative: **Nederlandsch Octrooibureau
P.O. Box 29720
2502 LS The Hague (NL)**

(54) **ELECTRONIC DEVICE COMPRISING CAMERA MODULE**

(57)    An electronic device includes a display including a panel layer in which a plurality of pixels are disposed, and a camera module disposed under the display, where the camera module includes an image sensor and a plurality of lenses, and an optical axis of the plurality of lenses passes through the panel layer. A coating layer, which lowers reflectance, is formed on a lens surface of the plurality of lenses when an angle of slope of a partial area of the lens surface is within a specified range. The angle of slope is an angle formed by the lens surface with a normal line perpendicular to the optical axis.

FIG.6

EP 4 340 337 A1

## Description

[Technical Field]

Various embodiments of the disclosure described herein relate to an electronic device including a camera module, and more particularly, relate to an electronic device including an under display camera.

[Background Art]

An electronic device may include a display module and a camera module. The display module may be configured to display contents on a portion of a surface of the electronic device. The camera module may be configured to take an image of an object by receiving external light reflected from the object through a portion of the surface of the electronic device.

Recently, a camera module may be provided in the form of an under display camera (UDC) module configured to receive external light through a partial camera area overlapping a display area of the display module in which contents are displayed to expand the display area of a display module.

[Disclosure]

[Technical Problem]

In an electronic device including a camera module in the form of the under display camera to receive external light through a display area of a display in which contents are displayed, a lens of the camera may be disposed to face pixels included in a display of the electronic device. The lens may receive external light through the area in which the pixels are disposed and the opening area in which the pixels are not disposed, and therefore a flare of a pixel pattern may be generated.

The flare of the pixel pattern in the under display camera may be generated by a path along which light transmitting through the display is reflected by a lens surface and then reflected by the rear surface of the display and is incident on an image sensor.

Various embodiments of the disclosure provide a camera module for reducing a flare or the strength thereof by forming a coating layer on at least a part of lens surfaces of a plurality of lenses of the camera module, and an electronic device including the camera module.

The technical problems to be solved by the disclosure are not limited to the aforementioned problems, and any other technical problems not mentioned herein will be clearly understood from the following description by those skilled in the art to which the disclosure pertains.

[Technical Solution]

An electronic device according to an embodiment of the disclosure includes a display including a panel layer in which a plurality of pixels are disposed, and a camera module disposed under the display, where the camera module includes an image sensor and a plurality of lenses, and an optical axis of the plurality of lenses passes through the panel layer. In such an embodiment, each of the plurality of lenses includes lens surfaces disposed face toward the display and the image sensor, respectively. In such an embodiment, a coating layer, which lowers reflectance, is formed on a lens surface of the plurality of lenses when an angle of slope of a partial area of the lens surface is within a specified range. In such an embodiment, the angle of slope is an angle formed by the lens surface with a normal line perpendicular to the optical axis.

A camera module according to an embodiment of the disclosure includes a plurality of lenses and an image sensor aligned with the plurality of lenses in a direction of an optical axis of the plurality of lenses. In such an embodiment, a reference area, based on which a coating condition for formation of a coating layer on lens surfaces of the plurality of lenses is determined, is defined for the plurality of lenses. In such an embodiment, the reference area includes a first reference area defined by an area overlapping a minimum effective diameter of lens surfaces of the plurality of lenses in the direction of the optical axis and a second reference area defined by an area having a same center as the first reference area and having a diameter 0.5 times a diameter of the first reference area. In such an embodiment, the coating layer is formed on a lens surface of the plurality of lenses when an angle of slope formed by the lens surface with a normal line perpendicular to the optical axis satisfies the coating condition. In such an embodiment, the coating condition includes a first coating condition or a second coating condition. In such an embodiment, the first coating condition is defined by the following conditional expressions: $-10° \leq AS1 \leq 10°$; and $-5° \leq AS2 \leq 5°$, and the second coating condition is defined by the following conditional expressions: $ED \geq 1.5 \times RaD$; and $15° \leq AS3 \leq 40°$, where "AS1" represents the angle of slope of a partial area of the lens surface located in the first reference area, "AS2" represents the angle of slope of a partial area of the lens surface located in the second reference area, "ED" represents an effective diameter of the lens surface, "RaD" represents the diameter of the first reference area, and "AS3" represents the angle of slope of a partial area of the lens surface located between an area whose diameter is 0.7 times the effective diameter and an area whose diameter is 0.85 times the effective diameter. In such an embodiment, the coating layer is formed on the lens surface satisfying at least one of the first coating condition or the second coating condition.

[ Advantageous Effects]

The electronic device according to various embodiments of the disclosure may reduce a flare or the strength thereof by applying the ultra-low reflective coating to at least a part of the lens surfaces of the plurality of lenses.

Furthermore, the electronic device according to the various embodiments of the disclosure may reduce manufacturing cost by forming the coating layer on the lens surface corresponding to the specific condition causing a flare among the lens surfaces of the plurality of lenses.

In addition, the disclosure may provide various effects that are directly or indirectly recognized.

[ Description of Drawings]

FIG. 1 is a block diagram of an electronic device in a network environment according to various embodiments.

FIG. 2 is a block diagram illustrating a camera module according to various embodiments.

FIG. 3A is a front perspective view of an electronic device according to an embodiment.

FIG. 3B is a rear perspective view of the electronic device according to an embodiment.

FIG. 4 is an exploded perspective view of an electronic device according to an embodiment.

FIG. 5 is a plan view of an electronic device according to an embodiment.

FIG. 6 is a sectional view of a portion where a camera module of the electronic device is disposed according to an embodiment.

FIG. 7 illustrates a path along which a flare occurs in the camera module of the electronic device according to an embodiment.

FIG. 8 illustrates the shape of transmitted light passed through a first area of a display of the electronic device according to an embodiment.

FIG. 9A is a sectional view of a portion of a camera module according to an embodiment.

FIG. 9B is a sectional view of a plurality of lenses of the camera module according to an embodiment.

FIG. 10A is a sectional view of a sixth lens of the camera module according to an embodiment.

FIG. 10B is a sectional view of a first lens of the camera module according to an embodiment.

FIG. 11 is a sectional view of a portion of the camera module according to an embodiment.

FIG. 12A illustrates a method of forming a coating layer on a lens surface of a camera module according to an embodiment.

FIG. 12B illustrates a method of forming a coating layer on a lens surface of a camera module according to an embodiment.

With regard to description of the drawings, identical or similar reference numerals may be used to refer to identical or similar components.

[ Mode for Invention]

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

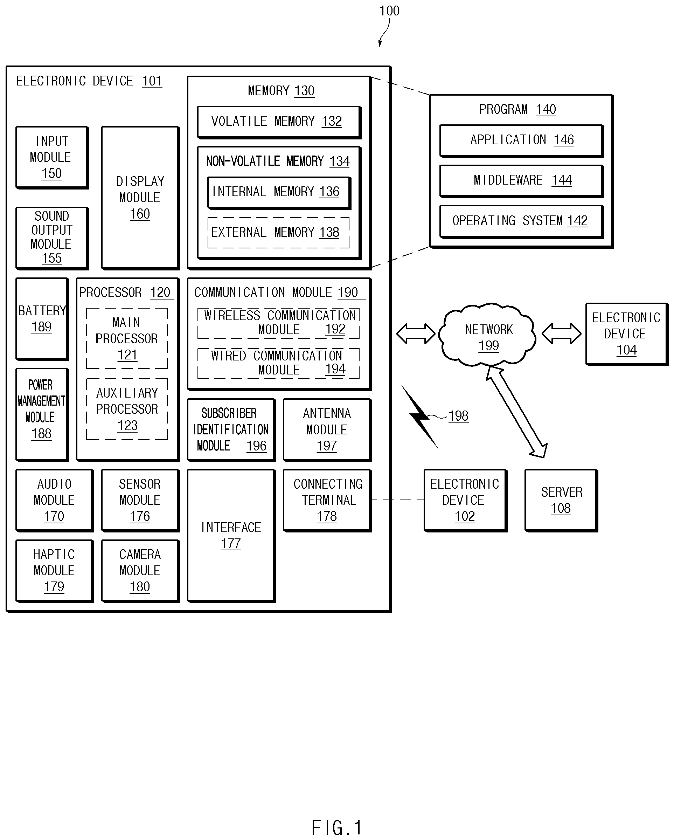

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108.

According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

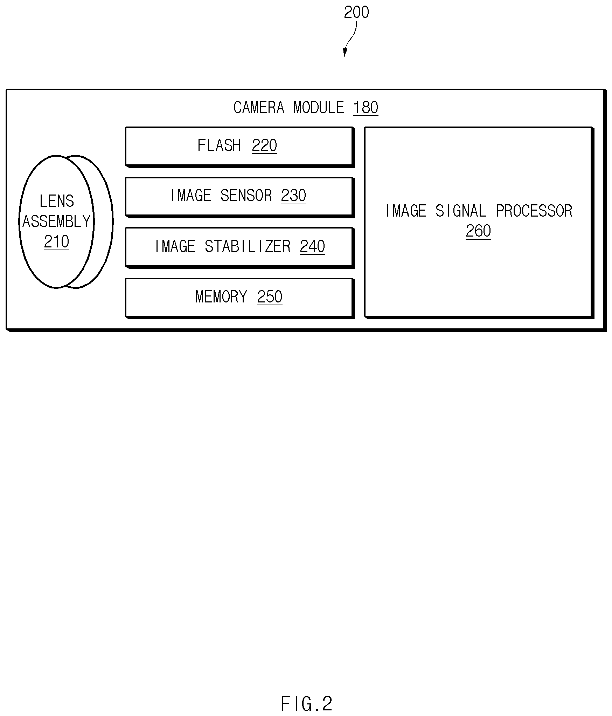

FIG. 2 is a block diagram illustrating the camera module according to various embodiments.

Referring to FIG. 2, the camera module 180 may include a lens assembly 210, a flash 220, an image sensor 230, an image stabilizer 240, memory 250 (e.g., buffer memory), or an image signal processor 260.

The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp.

The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180.

According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

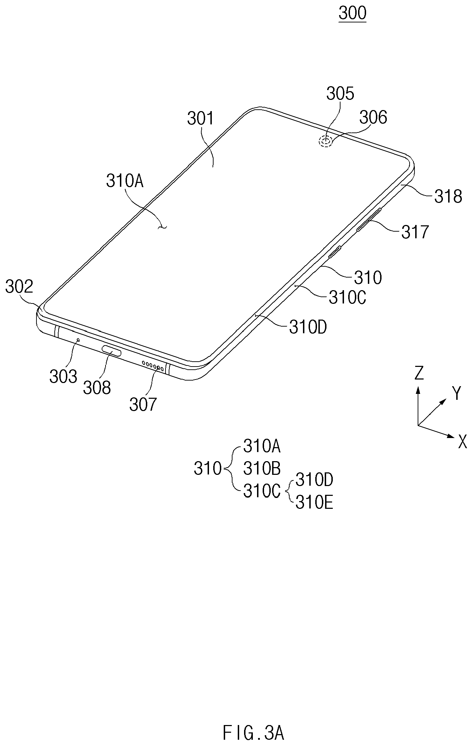

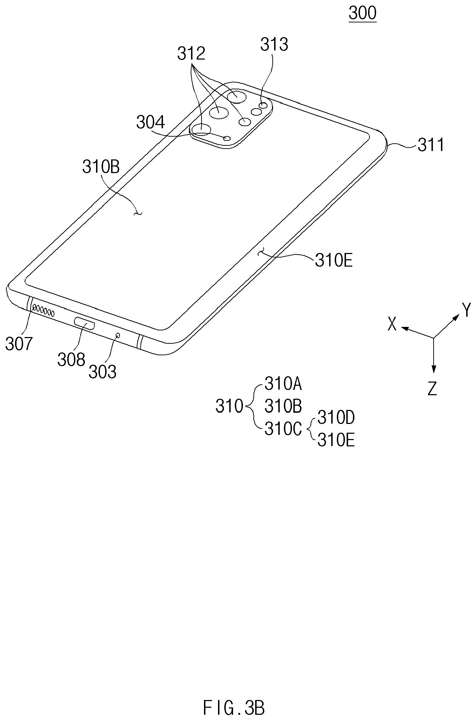

FIG. 3A is a front perspective view of an electronic device according to an embodiment. FIG. 3B is a rear perspective view of the electronic device according to an embodiment.

Referring to FIGS. 3A and 3B, the electronic device 300 according to an embodiment (e.g., the electronic device 101 of FIG. 1) may include a housing 310 that includes a first surface (or, a front surface) 310A, a second surface (or, a rear surface) 310B, and a third surface (or, a side surface) 310C surrounding a space between the first surface 310A and the second surface 310B.

In another embodiment, the housing 310 may refer to a structure that forms some of the first surface 310A, the second surface 31 0B, and the third surface 310C.

In an embodiment, the first surface 310A may be formed or defined by a front plate 302, at least a portion of which is substantially transparent (e.g., a glass plate including various coating layers, or a polymer plate). The second surface 310B may be formed or defined by a back plate 311 that is substantially opaque. The back plate 311 may include or be formed of, for example, coated or colored glass, ceramic, a polymer, metal (e.g., aluminum, stainless steel (STS), or magnesium), or a combination of at least two of the aforementioned materials. The third surface 310C may be formed or defined by a side bezel structure (or, a side member) 318 that is coupled with the front plate 302 and the back plate 311 and that contains metal and/or a polymer.

In another embodiment, the back plate 311 and the side bezel structure 318 may be integrally formed with each other and may contain the same material (e.g., a metallic material such as aluminum).

In the illustrated embodiment, the front plate 302 may include two first areas 310D that curvedly and seamlessly extend from partial areas of the first surface 310A toward the back plate 311. The first areas 310D may be located at opposite long edges of the front plate 302.

In the illustrated embodiment, the back plate 311 may include two second areas 310E that curvedly and seamlessly extend from partial areas of the second surface 310B toward the front plate 302. The second areas 310E may be located at opposite long edges of the back plate 311.

In another embodiment, the front plate 302 (or, the back plate 311) may include only one of the first areas 310D (or, the second areas 31 0E). Furthermore, in another embodiment, the front plate 302 (or, the back plate 311) may not include a part of the first areas 310D (or, the second areas 310E).

In an embodiment, when viewed from a side of the electronic device 300, the side bezel structure 318 may have a first thickness (or, width) at sides (e.g., short sides or sides in the X-axis direction) not including the first areas 310D or the second areas 310E and may have a second thickness at sides (e.g., long sides or sides in the Y-axis direction) including the first areas 310D or the second areas 310E, where the second thickness is smaller than the first thickness.

In an embodiment, the electronic device 300 may include at least one of a display 301 (e.g., the display module 160 of FIG. 1), audio modules 303, 304, 307 (e.g., the audio module 170 of FIG. 1), a sensor module (not illustrated) (e.g., the sensor module 176 of FIG. 1), camera modules 305, 312, and 313 (e.g., the camera module 180 of FIG. 1), key input devices 317 (e.g., the input device 150 of FIG. 1), a light emitting element (not illustrated), or a connector hole 308 (e.g., the connecting terminal 178 of FIG. 1). In another embodiment, at least one component (e.g., the key input devices 317 or the light emitting element (not illustrated)) among the aforementioned components may be omitted from the electronic device 300, or other component(s) may be additionally included in the electronic device 300.

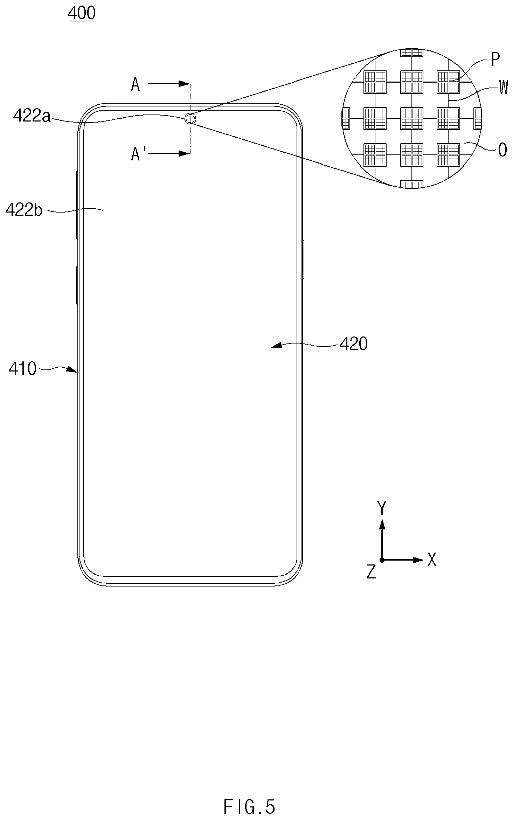

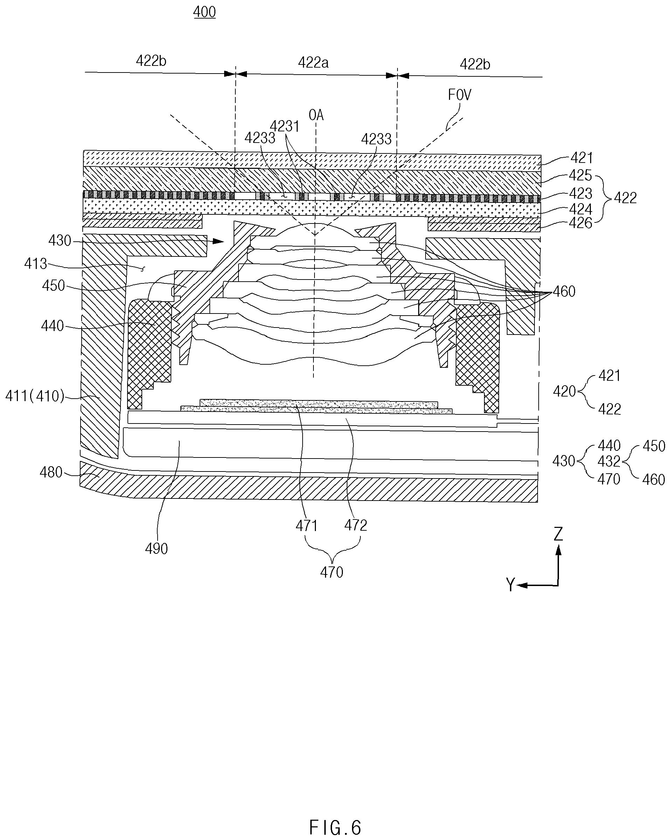

In an embodiment, the display 301 may be visually exposed through most of the front plate 302. For example, at least a portion of the display 301 may be visually exposed through the front plate 302 that includes the first surface 310A and the first areas 310D of the third surface 310C. The display 301 may be disposed on the rear surface of the front plate 302. According to various embodiments, the display 301 and the front plate 302 may be attached to each other to be implemented as a single module and may be referred to as, for example, a display module (e.g., a display module 420 of FIGS. 5 and 6).

In an embodiment, the periphery of the display 301 may have a shape substantially the same as the shape of the adjacent outside edge of the front plate 302. In another embodiment, to expand the area by which the display 301 is visually exposed, the gap between the outside edge of the display 301 and the outside edge of the front plate 302 may be substantially constant.

In an embodiment, a surface of the housing 310 (or, the front plate 302) may include a screen display area that is formed as or defined by the display 301 is visually exposed. For example, the screen display area may include the first surface 310A and the first areas 310D of the side surface 310C.

In another embodiment, the screen display area 310A and 310D may include a sensing area (not illustrated) that is configured to obtain biometric information of a user. When the screen display area 310A and 310D includes the sensing area, this may mean that at least a portion of the sensing area overlaps the screen display area 310A and 310D. For example, the sensing area (not illustrated) may refer to an area capable of displaying visual information by the display 301 like other areas of the screen display area 310A and 310D and additionally obtaining biometric information (e.g., a fingerprint) of the user.

In another embodiment (not illustrated), the display 301 may include, or may be disposed adjacent to, touch detection circuitry, a pressure sensor for measuring the intensity (pressure) of a touch, and/or a digitizer for detecting a stylus pen of a magnetic field type.

In various embodiments, the display 301 may be configured such that at least one of an audio module (not illustrated), a sensor module (not illustrated), a camera module (e.g., the first camera module 305), or a light emitting element (not illustrated) is disposed on the rear surface of the screen display area 310A and 310D. For example, the electronic device 300 may be configured such that the first camera module 305 (e.g., an under display camera (UDC)) is disposed on the rear side (e.g., the side facing the -z-axis direction) of the first surface 310A (e.g., the front surface) and/or the side surface 310C (e.g., at least one surface of the first areas 310D) so as to face toward the first surface 310A and/or the side surface 310C. For example, the first camera module 305 may be disposed under the display 301 and may not be visually exposed through the screen display area 310A and 310D.

In an embodiment, an area of the display 301 that faces the first camera module 305 may be a transmissive area (e.g., a first area 422a of FIGS. 5 and 6) that functions as a portion of an area displaying contents and that has a specified transmittance such that light passes therethrough. For example, the transmissive area may be formed to have a transmittance of about 5% to about 50%. The transmissive area may include an area, through which light to be focused on an image sensor (e.g., the image sensor 230 of FIG. 2 or an image sensor 471 of FIG. 6) to generate an image passes, and that overlaps an effective area (e.g., a field of view (FOV)) of the first camera module 305. For example, the transmissive area of the display 301 may include an area having a lower pixel density and/or wiring density than those of a peripheral area (e.g., a second area 422b of FIGS. 5 and 6).

In an embodiment, the audio modules 303, 304, and 307 may include the microphone holes 303 and 304 and the speaker hole 307.

In an embodiment, the microphone holes 303 and 304 may include the first microphone hole 303 formed (or defined) in a partial area of the third surface 310C and the second microphone hole 304 formed in a partial area of the second surface 310B. A microphone (not illustrated) for obtaining an external sound may be disposed in the microphone holes 303 and 304. The microphone may include a plurality of microphones to sense the direction of a sound.

In an embodiment, the second microphone hole 304 formed or defined in the partial area of the second surface 310B may be disposed adjacent to the camera modules 312 and 313. For example, the second microphone hole 304 may obtain sounds when the camera modules 312 and 313 are executed, or may obtain sounds when other functions are executed.

In an embodiment, the speaker hole 307 may include an external speaker hole 307 and a receiver hole for telephone call (not illustrated). The external speaker hole 307 may be formed in a portion of the third surface 310C of the electronic device 300. In another embodiment, the external speaker hole 307 and the microphone hole 303 may be implemented as a single hole. Although not illustrated, the receiver hole for telephone call (not illustrated) may be formed in another portion of the third surface 310C. For example, the receiver hole for telephone call may be formed in another portion (e.g., a portion facing the +Y-axis direction) of the third surface 310C that faces the portion (e.g., a portion facing the -Y-axis direction) of the third surface 310C in which the external speaker hole 307 is formed. According to various embodiments, the receiver hole for telephone call may not be formed in a portion of the third surface 310C and may be formed by a separation space between the front plate 302 (or, the display 301) and the side bezel structure 318.

In an embodiment, the electronic device 300 may include at least one speaker (not illustrated) that is configured to output a sound outside the housing 310 through the external speaker hole 307 or the receiver hole for telephone call (not illustrated). According to various embodiments, the speaker may include a piezoelectric speaker from which the speaker hole 307 is omitted.

In an embodiment, the sensor module (not illustrated) may generate an electrical signal or a data value that corresponds to an operational state inside the electronic device 300 or an environmental state external to the electronic device 300. For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor.

In an embodiment, the camera modules 305, 312, and 313 may include the first camera module 305 configured to receive light through a camera area 306 of the first surface 310A of the electronic device 300 and the second camera module 312 and/or the flash 313 visually exposed on the second surface 310B. For example, the first camera module 305 may include an under display camera (UDC).

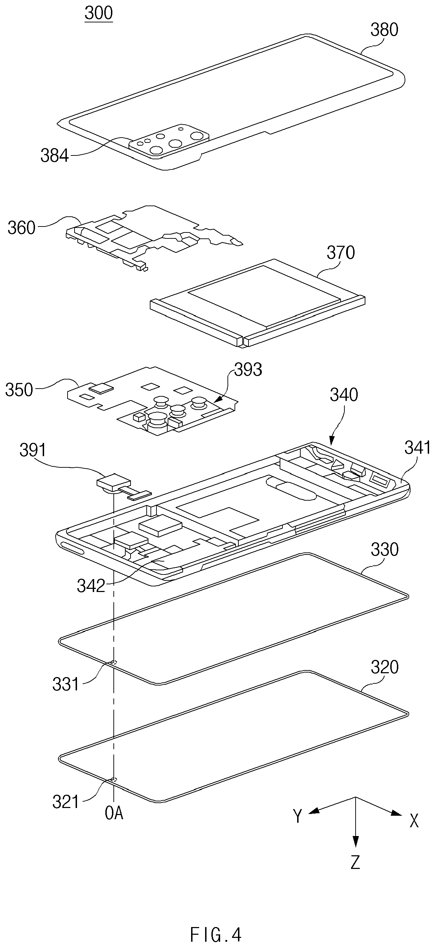

In an embodiment, the first camera module 305 may be disposed under the display 301 and may be configured to receive light through the camera area 306 that is a partial area of the screen display area 310A and 310D. For example, the first camera module 305 may be disposed in an internal structure of the housing 310 (e.g., a side member 340 of FIG. 4) such that a lens faces toward the camera area 306.

In an embodiment, the first camera module 305 may be configured to receive light through the camera area 306 formed (or defined) in at least a portion of the screen display area 310A and 310D. For example, the camera area 306 may be included in the screen display area 310A and 310D. In an embodiment where the camera area 306 is included in the screen display area 310A and 310D, this may mean that the camera area 306 is formed to be a partial area of the screen display area 310A and 310D and at least a portion of the camera area 306 overlaps the screen display area 310A and 310D. For example, the camera area 306 may be configured to display contents, like the remaining area of the screen display area 310A and 3100 other than the camera area 306 when the first camera module 305 does not operate. For example, the camera area 306 may be an area configured to pass light incident on the first camera module 305 without displaying contents when the first camera module 305 operates.

In an embodiment, an optical signal incident through the camera area 306 may pass through a pixel array of the display 301 (e.g., a panel layer 423 of FIG. 6) and the lens of the first camera module 305 (e.g., a lens 460 of FIG. 6) and may be received by the image sensor of the first camera module 305.

In an embodiment, the second camera module 312 may include a plurality of cameras (e.g., a dual camera, a triple camera, or a quad camera). However, the second camera module 312 is not necessarily limited to including the plurality of cameras, and alternatively, may include a single camera.

In an embodiment, the first camera module 305 and the second camera module 312 may include one or more lenses, an image sensor, and/or an image signal processor. The flash 313 may include, for example, a light emitting diode or a xenon lamp. In another embodiment, two or more lenses (an infrared camera lens, a wide angle lens, and a telephoto lens) and image sensors may be disposed in the housing 310 to face toward one surface (e.g., the second surface 310B) of the electronic device 300.

In an embodiment, the key input devices 317 may be disposed on the third surface 310C of the housing 310 (e.g., the first areas 310D and/or the second areas 310E). In another embodiment, the electronic device 300 may not include all or some of the key input devices 317, and the key input devices 317 not included may be implemented in a different form, such as a soft key, on the display 301. In another embodiment, the key input devices 317 may include a sensor module (not illustrated) that forms the sensing area (not illustrated) that is included in the screen display area 310A and 310D.

In an embodiment, the connector hole 308 may accommodate a connector. The connector hole 308 may be disposed in the third surface 310C of the housing 310. For example, the connector hole 308 may be disposed in the third surface 310C to be adjacent to at least a part of the audio modules (e.g., the microphone hole 303 and the speaker hole 307). In another embodiment, the electronic device 300 may include the first connector hole 308 capable of accommodating a connector (e.g., a USB connector) for transmitting/receiving power and/or data with an external electronic device, and/or a second connector hole (not illustrated) capable of accommodating a connector (e.g., an earphone jack) for transmitting/receiving audio signals with an external electronic device.

In various embodiments, the electronic device 300 may include a light emitting element (not illustrated). For example, the light emitting element (not illustrated) may be disposed on the first surface 310A of the housing 310. The light emitting element (not illustrated) may provide state information of the electronic device 300 in the form of light. In another embodiment, the light emitting element (not illustrated) may provide a light source that operates in conjunction with operation of the first camera module 305. For example, the light emitting element (not illustrated) may include an LED, an IR LED, and/or a xenon lamp.

FIG. 4 is an exploded perspective view of an electronic device according to an embodiment.

Referring to FIG. 4, the electronic device 300 according to an embodiment may include a front plate 320 (e.g., the front plate 302 of FIG. 3A), a display 330 (e.g., the display 301 of FIG. 3A), the side member 340 (e.g., the side bezel structure 318 of FIG. 3A), a printed circuit board 350, a rear case 360, a battery 370, a back plate 380 (e.g., the back plate 311 of FIG. 3B), camera modules 391 and 393 (e.g., the camera modules 305, 312, and 313 of FIGS. 3A and 3B), and an antenna (not illustrated).

In various embodiments, the electronic device 300 may not include at least one component (e.g., the rear case 360) among the aforementioned components, or may additionally include other component(s). Some of the components of the electronic device 300 illustrated in FIG. 4 may be identical or similar to some of the components of the electronic device 300 illustrated in FIGS. 3A and 3B. Hereinafter, repetitive descriptions will be omitted.

In an embodiment, the front plate 320 and the display 330 may be coupled to the side member 340. For example, as shown in FIG, 4, the front plate 320 and the display 330 may be disposed under the side member 340. The front plate 320 and the display 330 may be located in the +Z-axis direction from the side member 340. For example, the display 330 may be coupled (or, attached) to one surface of the side member 340 that faces the +Z-axis direction, and the front plate 320 may be coupled (or, attached) to one surface of the display 330 that faces the +Z-axis direction. The front plate 320 may form (or define) a portion of the outer surface (or, the exterior) of the electronic device 300. The display 330 may be disposed between the front plate 320 and the side member 340 to be located inside the electronic device 300. In various embodiments, the front plate 320 and the display 330 may be attached to each other and may be implemented as a single module (e.g., the display module 420 of FIGS. 5 and 6).

In an embodiment, the side member 340 may be disposed between the display 330 and the back plate 380. In an embodiment, the side member 340 may include a frame structure 341 that forms a portion of a side surface of the electronic device 300 (e.g., the third surface 310C of FIG. 3A) and a plate structure 342 extending inward from the frame structure 341.

In an embodiment, the plate structure 342 may be disposed inside the frame structure 341 to be surrounded by the frame structure 341. The plate structure 342 may be connected with the frame structure 341, or may be integrally formed with the frame structure 341. The plate structure 342 may include or be formed of a metallic material and/or a nonmetallic (e.g., polymer) material. In an embodiment, the plate structure 342 may support other components included in the electronic device 300. For example, at least one of the display 330, the printed circuit board 350, the rear case 360, or the battery 370 may be disposed on the plate structure 342. For example, the display 330 may be coupled to one surface (e.g., the surface facing the +Z-axis direction) of the plate structure 342, and the printed circuit board 350 may be coupled to an opposite surface (e.g., the surface facing the -Z-axis direction) facing away from the one surface.

In various embodiments, the side member 340 may be disposed to surround the space between the front plate 320 and the back plate 380 and may form (or define) the housing of the electronic device 300 (e.g., the housing 310 of FIGS. 3A and 3B) together with the front plate 320 and the back plate 380.

In an embodiment, the rear case 360 may be disposed between the back plate 380 and the plate structure 342. The rear case 360 may be coupled to the side member 340 to overlap at least a portion of the printed circuit board 350. For example, the rear case 360 may face the plate structure 342 with the printed circuit board 350 therebetween.

In an embodiment, a processor (e.g., the processor 120 of FIG. 1), memory (e.g., the memory 130 of FIG. 1), and/or an interface (e.g., the interface 177 of FIG. 1) may be mounted on the printed circuit board 350. The processor may include, for example, one or more of a central processing unit, an application processor, a graphic processing unit, an image signal processor, a sensor hub processor, or a communication processor. The memory may include, for example, volatile memory or nonvolatile memory. The interface may include, for example, a high definition multimedia interface (HDMI), a universal serial bus (USB) interface, an SD card interface, and/or an audio interface. The interface may electrically or physically connect the electronic device 300 with an external electronic device and may include a USB connector, an SD card/MMC connector, or an audio connector.

In an embodiment, the battery 370 (e.g., the battery 189 of FIG. 1) may supply power to at least one component of the electronic device 300. For example, the battery 370 may include a primary cell that is not rechargeable, a secondary cell that is rechargeable, or a fuel cell. At least a portion of the battery 370 may be disposed on substantially the same plane as the printed circuit board 350. The battery 370 may be integrally or fixedly disposed inside the electronic device 300, or may be disposed to be detachable from the electronic device 300.

In an embodiment, the antenna (not illustrated) (e.g., the antenna module 197 of FIG. 1) may be disposed between the back plate 380 and the battery 370. The antenna (not illustrated) may include, for example, a near field communication (NFC) antenna, a wireless charging antenna, and/or a magnetic secure transmission (MST) antenna. For example, the antenna (not illustrated) may perform short-range communication with an external device, or may wirelessly transmit and receive power required for charging.

In an embodiment, the first camera module 391 (e.g., the first camera module 305 of FIG. 3A) may be disposed on at least a portion of the side member 340 (e.g., the plate structure 342) such that a lens of the first camera module 391 receives external light through a camera area 321 formed in the front plate 320 (e.g., the front surface 310A of FIG. 3A). For example, the lens of the first camera module 391 may be aligned with a transmissive area 331 formed in the display 330 and the camera area 321 formed in the front plate 320 in the direction of an optical axis OA. The first camera module 391 may be disposed in an opening (not illustrated) of the plate structure 342 of the side member 340 such that the lens faces the display 330.

In an embodiment, the first camera module 391 may be disposed in a way such that the lens receives light passed through the transmissive area 331 of the display 330 and the camera area 321 of the front plate 320. The camera area 321 and the transmissive area 331 may at least partially overlap a screen display area (e.g., the screen display area 310A and 310D of FIGS. 3A and 3B) on which contents are displayed.

In an embodiment, the first camera module 391 may be configured to receive light passed through the camera area 321 and a pixel array of the display 330. For example, the first camera module 391 may be configured such that the optical axis OA of the lens passes through a portion of the transmissive area 331 of the display 330 and a portion of the camera area 321 of the front plate 320. The transmissive area 331 of the display 330 may include a pixel array (e.g., the panel layer 423 of FIG. 6). For example, the transmissive area 331 of the display 330 may be an area having a lower pixel density and/or wiring density (e.g., a smaller number of pixels and/or wires per unit area) than that of other areas.

In an embodiment, the second camera module 393 (e.g., the second camera modules 312 and 313 of FIG. 3B) may be disposed on the printed circuit board 350 in a way such that a lens receives external light through a rear camera area 384 of the back plate 380 of the electronic device 300 (e.g., the rear surface 310B of FIG. 3B). For example, the lens of the second camera module 393 may be visually exposed through the rear camera area 384. In an embodiment, the second camera module 393 may be disposed in at least a portion of an inner space formed in the housing of the electronic device 300 (e.g., the housing 310 of FIGS. 3A and 3B) and may be electrically connected to the printed circuit board 350 through a connecting member (e.g., a connector).

In an embodiment, the rear camera area 384 may be formed in a surface of the back plate 380 (e.g., the rear surface 310B of FIG. 3B). In an embodiment, at least a portion of the rear camera area 384 may be formed to be transparent such that external light is incident on the lens of the second camera module 393. In an embodiment, at least a portion of the rear camera area 384 may protrude to a predetermined height from the surface of the back plate 380. However, without being necessarily limited thereto, the rear camera area 384 may form substantially the same plane as the surface of the back plate 380.

FIG. 5 is a plan view of an electronic device according to an embodiment. FIG. 6 is a sectional view of a portion where a camera module of the electronic device is disposed according to an embodiment.

FIG. 6 illustrates a section of the electronic device 400 taken along line A-A' illustrated in FIG. 5. For example, FIG. 6 may be a sectional view of a portion corresponding to the camera area 306 of the electronic device 300 illustrated in FIGS. 3A and 3B.

Referring to FIGS. 5 and 6, the electronic device 400 according to an embodiment may include a side member 410 (e.g., the side member 430 of FIG. 4), the display module 420 (e.g., the front plate 320 and the display 330 of FIG. 4), the camera module 430 (e.g., the first camera module 305 of FIG. 3A or the first camera module 391 of FIG. 4), a back cover 480 (e.g., the back plate 380 of FIG. 4), and a printed circuit board 490 (e.g., the printed circuit board 350 of FIG. 4).

Some of the components of the electronic device 400 illustrated in FIGS. 5 and 6 may be identical or similar to some of the components of the electronic device 300 illustrated in FIG. 4. Hereinafter, repetitive descriptions will be omitted.

In an embodiment, the side member 410 may include a plate structure 411. For example, the side member 410 may include a frame structure (e.g., the frame structure 341 of FIG. 4) and the plate structure 411 (e.g., the plate structure 342 of FIG. 4) that extends from the frame structure 341. The display module 420 may be disposed on one surface (e.g., the surface facing the +Z-axis direction) of the plate structure 411, and the printed circuit board 490 may be disposed on an opposite surface (e.g., the surface facing the -Z-axis direction) of the plate structure 411. In various embodiments, the side member 410 may be referred to as a bracket to which other components of the electronic device 400 are coupled or supported.

In an embodiment, the plate structure 411 of the side member 410 may include a camera receiving section 413 in which at least a portion of the camera module 430 is accommodated. The camera receiving section 413 may penetrate at least a portion of the plate structure 411 in a direction parallel to an optical axis OA.

For example, the camera module 430 may be accommodated in the camera receiving section 413, and at least a part of a plurality of lenses 460 may be disposed through the plate structure 411 to face the display module 420.

In an embodiment, the back cover 480 may form at least a portion of a surface of the electronic device 400 together with the display module 420 and the side member 410. For example, the back cover 480 may form the rear surface (e.g., the surface facing -Z-axis direction) of the electronic device 400. In various embodiments, the back cover 480 and the side member 410 may form the housing of the electronic device 400 (e.g., the housing 310 of FIGS. 3A and 3B) together with a front cover 421 included in the display module 420. For example, the housing of the electronic device 400 may be understood as the structure in which a predetermined space in which other components of the electronic device 400 are disposed is formed by a coupling of the front cover 421 and the back cover 480 with the side member 410.

In an embodiment, the display module 420 may include the front cover 421 (e.g., the front plate 320 of FIG. 4) and a display 422 (e.g., the display 330 of FIG. 4) attached to the rear surface (e.g., the surface facing the -Z-axis direction) of the front cover 421. For example, the display module 420 may be referred to as one display device (or, display structure) that includes the display 422 and the front cover 421 coupled with each other. In various embodiments, the front cover 421 may be referred to as a substantially transparent window layer (or, cover layer), and the display 422 may be referred to as a display panel attached to the rear surface of the window layer.

In an embodiment, the display module 420 may be attached to the plate structure 411 of the side member 410. For example, the display module 420 may be disposed in a way such that the display 422 is attached to one surface of the plate structure 411 and the front cover 421 is attached to the upper surface of the display 422. The display 422 may be visually exposed on the front surface of the electronic device 400 through the front cover 421.

In an embodiment, the front cover 421 may include or be formed of a substantially transparent material. The front cover 421 may include a polyethylene terephthalate (PET) material, a polyimide (PI) material, and/or a glass material (e.g., ultra thin glass (UTG)). For example, the front cover 421 may form at least a portion of the front surface of the electronic device 400. The front cover 421 may be implemented in the form of a thin film (e.g., a thin film layer) that protects the display 422 and contributes to flexibility.

Although not illustrated in FIG. 6, the front cover 421 may include a plurality of layers according to various embodiments. For example, the front cover 421 may have a form in which various coating layers are disposed on a plastic film or a thin glass film. For example, the front cover 421 may have a form in which at least one protective layer or coating layer including a polymer material (e.g., polyester (PET), polyimide (PI), or thermoplastic polyurethane (TPU)) is disposed on a plastic film or a thin glass film. In an embodiment, the front cover 421 may include at least one optical compensation film. Furthermore, an optical compensation film may be disposed on the front cover 421, and a protective layer (or, a coating layer) may be disposed on the optical compensation film. For example, the optical compensation film may have a protective film function or a shock absorbing function, in addition to an optical compensation function.

In an embodiment, the display 422 may include a plurality of layers. The plurality of layers may include a base layer 424, the panel layer 423, an encapsulation layer 425, and/or a support layer 426.

In an embodiment, the base layer 424 may contain a transparent polymer material and/or a glass material and may serve to support and protect the panel layer 423. For example, the base layer 424 may be referred to as a protective film, a back film, or a back plate. The panel layer 423 including a plurality of pixels 4231 may be disposed on the base layer 424.

According to various embodiments, the base layer 424 may include a transparent insulating substrate (e.g., a substrate). For example, the base layer 424 may be implemented with a glass substrate, a quartz substrate, or a transparent resin substrate. For example, the transparent resin substrate may include a polyimide-based resin, an acryl-based resin, a polyacrylate-based resin, a polycarbonate-based resin, a polyether-based resin, a sulfonic acid-based resin, and/or a polyethyleneterephthalate-based resin.

In an embodiment, the panel layer 423 may include a pixel array including a plurality of light emitting elements (e.g., organic light emitting diodes). For example, the panel layer 423 may include a pixel array including the plurality of pixels 4231 implemented with light emitting elements, such as organic light emitting diodes (OLEDs) or micro light emitting diodes (micro LEDs). In various embodiments, the panel layer 423 may include the plurality of pixels 4231, each of which is constituted by a plurality of sub-pixels (e.g., red, green, and blue sub-pixels).

In an embodiment, the panel layer 423 may be disposed on a thin film transistor (TFT) film through evaporation of an organic material, and the TFT film may be located between the panel layer 423 and the base layer 424. The TFT film may refer to a structure in which at least one TFT is disposed on a flexible substrate (e.g., a PI film) through a series of processes such as deposition, patterning, and etching. The at least one TFT may control On/Off of a pixel or the brightness of the pixel by controlling a current for a light emitting element of the pixel array. The at least one TFT may be implemented with, for example, an amorphous silicon (a-Si) TFT, a liquid crystalline polymer (LCP) TFT, a low-temperature polycrystalline oxide (LTPO) TFT, or a low-temperature polycrystalline silicon (LTPS) TFT.

In an embodiment, the panel layer 423 may include a plurality of wires (not illustrated) electrically connected to the plurality of pixels 4231. For example, the panel layer 423 may include an emissive layer (not illustrated) in which the plurality of pixels are disposed and a wiring layer (not illustrated) that is located between the emissive layer and the base layer 424 and in which a plurality of wires are formed. In various embodiments, the wiring layer may include TFT elements for driving the plurality of pixels 4231, metal wiring, insulating films, or the like.

In an embodiment, the encapsulation layer 425 (e.g., a thin film encapsulation (TFE)) may be disposed on the panel layer 423 and may protect the plurality of pixels 4231 from oxygen or moisture. For example, the encapsulation layer 425 may be a pixel protection layer for protecting the plurality of pixels 4231. For example, the encapsulation layer 425 may include encapsulation glass.

In an embodiment, the support layer 426 may include a cushion member and various layers for shielding light, absorbing or shielding electromagnetic waves, or diffusing, distributing, or radiating heat. According to an embodiment, the cushion member may alleviate an external impact applied to the display module 420. For example, the cushion member may include a sponge layer or a cushion layer.

In an embodiment, the support layer 426 may include a shielding layer for shielding the display module 420 and/or a metal layer (e.g., a conductive member) for maintaining a flat surface of the display. For example, the metal layer may include at least one of copper (Cu), aluminum (Al), stainless steel (SUS), or CLAD (e.g., a laminated member in which SUS and Al are alternately arranged).

In an embodiment, the support layer 426 may diffuse, distribute, or radiate heat generated from the electronic device 400 or the display module 420 (e.g., a display driver IC). For example, the support layer 426 may include a layer including graphite and/or a conductive adhesive layer (a conductive tape).

In an embodiment, the support layer 426 may absorb or shield electromagnetic waves (or, noise) and may alleviate an external impact applied to the electronic device 400 or the display module 420. According to an embodiment, the support layer 426 may include a composite sheet or a copper sheet, and the composite sheet may be a sheet obtained by laminating layers or sheets having different properties from each other. For example, the composite sheet may be replaced with a single sheet including a material (e.g., polyimide or graphite).

In an embodiment, at least a portion of the support layer 426 may be open, that is, an open area is defined through at least a portion of the support layer 426, and at least a portion of the camera module 430 (e.g., a part of the plurality of lenses 460) may be accommodated in the open area. For example, the open area of the support layer 426 may be included in the first area 422a of the display module 420.

In various embodiments, the display module 420 may further include other layers between the front cover 421 and the encapsulation layer 425. For example, the display module 420 may further include a touch electrode layer (not illustrated) including touch electrodes. In another example, the display module 420 may further include a polarizer layer (e.g., a polarizer film).

In various embodiments, the display module 420 may further include an adhesive layer (not illustrated) that is disposed between the plurality of layers. The adhesive layer may be formed by using an optically clear adhesive member. For example, the optically clear adhesive member may include an optically clear adhesive (OCA), an optically clear resin (OCR), or a super view resin (SVR).

In an embodiment, the display 422 may include the first area 422a overlapping the field of view (FOV) of the camera module 430 and the second area 422b around the first area 422a. The first area 422a may be a transmissive area through which light passes such that the camera module 430 receives light from outside the electronic device 400 therethrough. For example, the first area 422a may be a portion of a screen display area on which contents are displayed and may be formed such that light passes through the first area 422a for operation of the camera module 430. The first area 422a may be formed to have a transmittance in a specified range, and the camera module 430 may receive light passed through the first area 422a and may generate an image signal. The first area 422a may have a higher transmittance than the second area 422b. In various embodiments, the first area 422a may be referred to as the transmissive area 331 of the display 330 illustrated in FIG. 4 and may overlap the camera area 321 of the front plate 320 illustrated in FIG. 4.

In an embodiment, the first area 422a of the display 422 may have a lower pixel density than the second area 422b. The arrangement density of a plurality of pixels and/or a plurality of wires may be lower in the first area 422a than in the second area 422b. For example, the number of pixels 4231 per unit area in the first area 422a may be smaller than the number of pixels 4231 per unit area in the second area 422b.

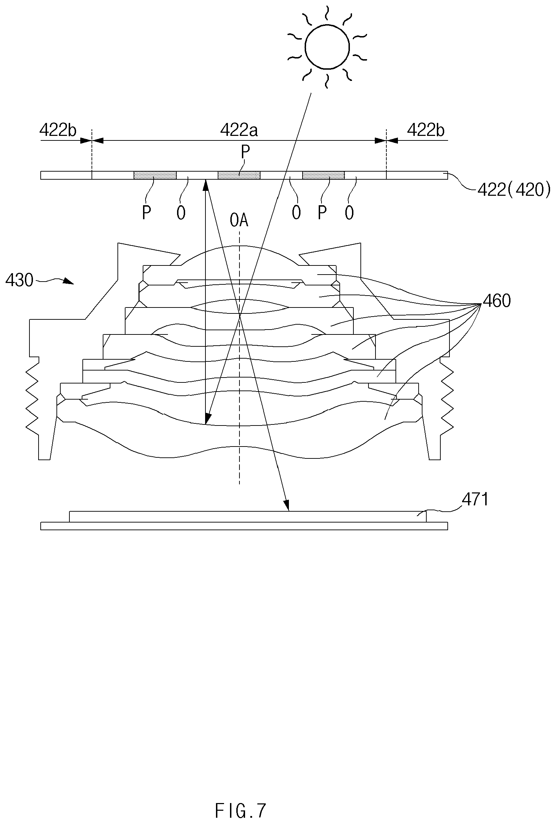

In an embodiment, at least a portion of the first area 422a may be formed to be a transmissive area such that external light passes therethrough. The first area 422a may include a plurality of pixel areas P (e.g., pixel areas P of FIG. 7) corresponding to the areas where the plurality of pixels 4231 are located, a plurality of wire areas W corresponding to the areas where the plurality of wires are located, and a plurality of opening areas O (e.g., opening areas O of FIG. 7) corresponding to the empty areas between the plurality of pixel areas P and the plurality of wire areas W. For example, the plurality of opening areas O may be formed by separation spaces 4233 between the plurality of pixels 4231 adjacent to one another on the panel layer 423 included in the first area 422a. The gap between the plurality of pixels 4231 may be formed to be larger in a partial area of the panel layer 423 that corresponds to the first area 422a than in the remaining partial area of the panel layer 423 that corresponds to the second area 422b. In various embodiments, the transmittance of the first area 422a may be determined based on the number, density, and/or size of opening areas O.

In an embodiment, when the display module 420 is viewed from above, the first area 422a may be divided into the plurality of pixel areas P, the plurality of wire areas W, and the plurality of opening areas O defined in the empty spaces therebetween. The first area 422a may pass light incident from the outside through the plurality of opening areas O. The plurality of pixel areas P and the plurality of wire areas W may have a lower light transmittance than the plurality of opening areas O. For example, the difference between a first transmittance of the plurality of pixel areas P (or, the plurality of wire areas W) and a second transmittance of the plurality of opening areas O may be about 15% or more based on light having a wavelength of about 550 nm. However, the transmittance difference is illustrative and is not limited thereto. For example, the plurality of pixel areas P and the plurality of wire areas W may be non-transmissive areas through which blocks light incident thereon.

In an embodiment, the camera module 430 may include a camera housing 440, a lens assembly 432 (e.g., the lens assembly 210 of FIG. 2), and a sensor assembly 470. For example, the sensor assembly 470 may include the image sensor 471 (e.g., the image sensor 230 of FIG. 2) and a sensor substrate 472.

In an embodiment, the lens assembly 432 and the image sensor 471 may be disposed in the camera housing 440. For example, the sensor substrate 472 may be fixed to a lower portion of the camera housing 440, and the image sensor 471 may be disposed on the sensor substrate 472 to face the plurality of lenses 460 inside the camera housing 440. The image sensor 471 may covert an optical signal incident thereon through the plurality of lenses 460 into an electrical signal.

In an embodiment, the lens assembly 432 may include the plurality of lenses 460 and a lens barrel 450. The plurality of lenses 460 may be aligned with respect to the optical axis OA. The lens barrel 450 may protrude from the camera housing 440 toward the display 422. The lens barrel 450 may include an opening (not illustrated) through which a lens 460 adjacent to the display 422 among the plurality of lenses 460 is exposed.

In an embodiment, the camera module 430 may be disposed under the display 422 in a way such that at least some of the plurality of lenses 460 are aligned with the first area 422a of the display 422 in the direction of the optical axis OA and may be configured to receive light passed through the first area 422a of the display 422. For example, the optical axis OA may pass through the first area 422a of the display 422. The camera module 430 may be configured in a way such that the field of view (FOV) overlaps the first area 422a of the display 422. For example, when the display module 420 is viewed from above, the field of view (FOV) of the camera module 430 may be formed in a corresponding size to coincide with the first area 422a, or may be formed in a size smaller than the first area 422a to be located in the first area 422a.

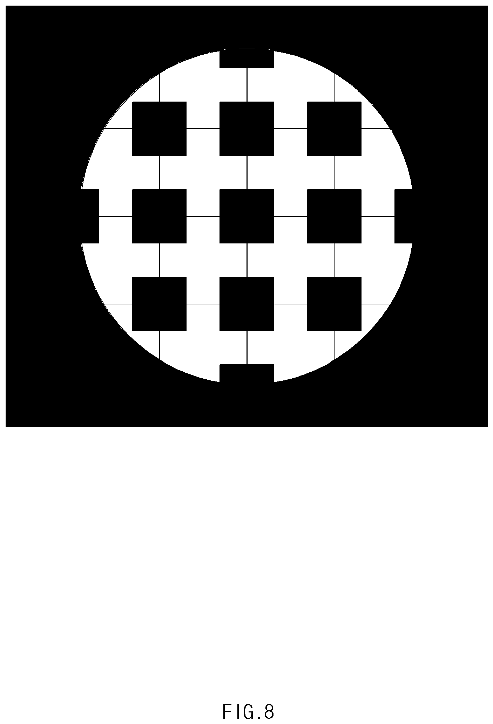

According to an embodiment, the camera module 430 may be disposed to overlap a plurality of pixels and/or wires so as to be provided in an under display camera (UDC) type, and therefore a flare in a pixel pattern shape may occur unlike in a case where an opening through which the camera module 430 receives light is formed in the panel layer 423. Hereinafter, a path along which a flare in a pixel pattern shape occurs will be described with reference to FIGS. 7 and 8.

FIG. 7 illustrates the path along which the flare occurs in the camera module of the electronic device according to an embodiment. FIG. 8 illustrates the shape of transmitted light passed through the first area of the display according to an embodiment.

Referring to FIGS. 7 and 8, the electronic device 400 according to an embodiment may include the display 422 and the camera module 430 located to overlap a partial area of the display 422. For example, the camera module 430 may receive external light through the first area 422a. In an embodiment, the first area 422a may be configured in a way such that the external light may transmit through a portion of the first area 422a and may not transmit through another portion.

In an embodiment, the camera module 430 may include the plurality of lenses 460 partially overlapping the first area 422a of the display 422 and the image sensor 471 on which at least a portion of light passed through the plurality of lenses 460 is incident. For example, the first area 422a of the display 422, the plurality of lenses 460, and the image sensor 471 may be aligned in the direction of the optical axis OA.

In an embodiment, the first area 422a of the display 422 may include the plurality of pixel areas P and the plurality of opening areas O. For example, the plurality of pixel areas P may be areas in which a plurality of pixels (e.g., the plurality of pixels 4231 of FIG. 6) are located and which block external light. The plurality of opening areas O may be areas in which opening portions (e.g., the separation spaces 4233 of FIG. 6) between the plurality of pixel areas P are located and through which external light passes for operation of the camera module 430. For example, external light may be delivered to the plurality of lenses 460 through the plurality of opening areas O of the first area 422a, and at least a portion of the external light transmitted through the first area 422a may transmit through the plurality of lenses 460 and may be incident on the image sensor 471.

In an embodiment, external light may be transmitted in a shape that corresponds to the plurality of pixel areas P, the plurality of wire areas (e.g., the wire areas W of FIG. 5), and the plurality of opening areas O of the first area 422a. For example, as light incident on the plurality of lenses 460 through the first area 422a is not allowed to pass through the plurality of pixel areas P and the plurality of wire areas W of the first area 422a and is allowed to pass through the plurality of opening areas O, the light may be transmitted in a pattern shape of pixels and/or wires. For example, as illustrated in FIG. 8, light transmitting through the first area 422a and reaching a lens surface closest to the first area 422a (e.g., the lens surface of the lens closest to the display 422 among the plurality of lenses) may form a shadow corresponding to the plurality of pixel areas P and the plurality of wire areas W. Accordingly, when a flare occurs during operation of the camera module 430, the flare may have a pixel pattern shape corresponding to the first area 422a.

In an embodiment, the flare having the pixel pattern shape may be generated as light transmitted through the first area 422a is reflected by the lens surface of at least a part of the plurality of lenses 460 and the light reflected by the lens surface is reflected by the rear surface of the display 422 and then incident on the image sensor 471. For example, the flare having the pixel pattern shape may be generated as the light firstly reflected by the lens surface spreads along various paths without converging after secondly reflected by the rear surface of the display 422 having a predetermined reflectance.

In an embodiment, the first area 422a of the display 422 may have a relatively high reflectance as the plurality of pixels 4231 and the plurality of wires electrically connecting the pixels are disposed in the first area 422a of the display 422. According to various embodiments, the reflectance of the rear surface of the first area 422a may be about 10% or more based on light having the wavelength range of about 450 nm to about 650 nm, but is not limited thereto.

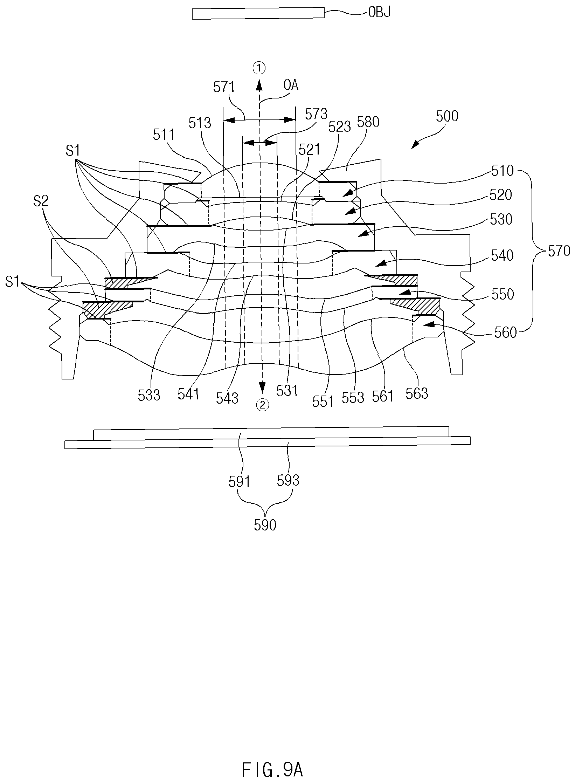

According to an embodiment, to reduce the flare having the pixel pattern shape, an ultra-low reflective coating may be applied to at least some of the lens surfaces of the plurality of lenses 460 in the camera module 430. For example, as the primary reflection of the flare generation path is generated by the lens surfaces of the plurality of lenses 460, the ultra-low reflective coating may be applied to a lens surface corresponding to a predetermined condition generating the flare, based on the shapes of the lens surfaces of the plurality of lenses 460. Hereinafter, a condition of a lens surface for applying an ultra-low reflective coating will be described with reference to FIGS. 9A to 10B.

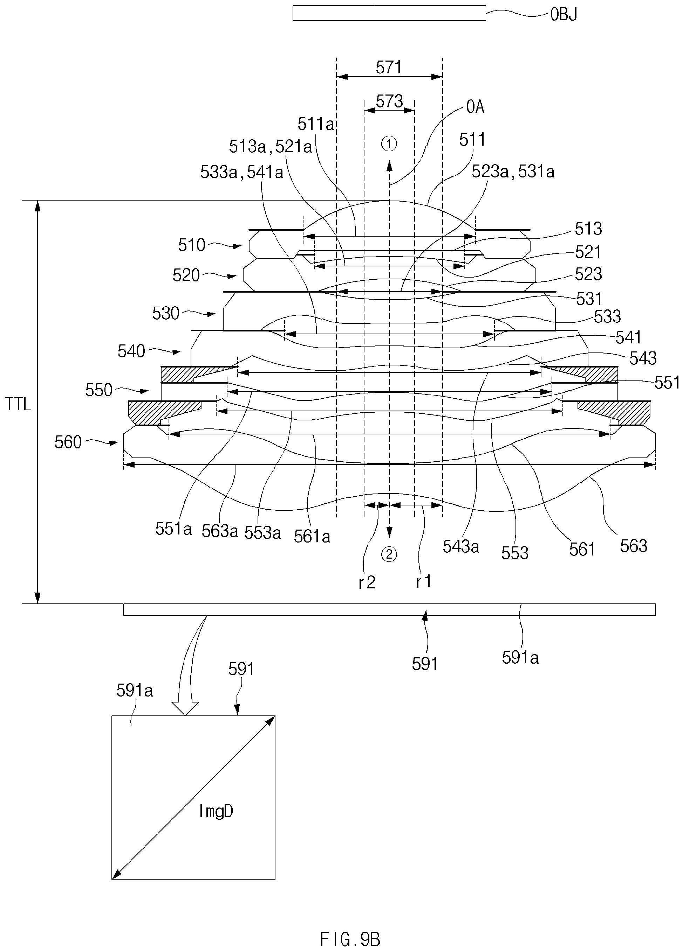

FIG. 9A is a sectional view of a portion of a camera module according to an embodiment. FIG. 9B is a sectional view of a plurality of lenses of the camera module according to an embodiment.

FIG. 9A may be a view in which the camera housing 440 is omitted from the camera module 430. FIG. 9B may be a view in which a lens barrel 580 is omitted from the camera module 500.

Referring to FIGS. 9A and 9B, the camera module 500 according to an embodiment (e.g., the first camera module 305 of FIG. 3A, the first camera module 391 of FIG. 4, or the camera module 430 of FIG. 6) may include the lens barrel 580, the plurality of lenses 570 disposed in the lens barrel 580, an image sensor assembly 590 including an image sensor 591 and a sensor substrate 593, and spacers S1 and S2 disposed between the plurality of lenses 570.

In an embodiment, the plurality of lenses 570 may be accommodated in the lens barrel 580. A step structure may be formed on the inside surface of the lens barrel 580. At least some of the plurality of lenses 570 or the spacers S1 and S2 may be attached to step surfaces of the step structure of the lens barrel 580. In an embodiment, the lens barrel 580 may have, in the upper surface thereof (e.g., the surface facing a first optical axis direction ①), an opening through which a first lens 510 is partially exposed.

In an embodiment, the plurality of lenses 570 may include one of a spherical lens and an aspheric lens. For example, the aspheric lens may include a flat lens whose optical portion is substantially flat. The plurality of lenses 570 may be aligned with respect to an optical axis OA. The optical axis OA may refer to an imaginary straight line connecting the center points of the plurality of lenses 570. For example, the optical axis OA may pass through the centers of the lens surfaces of the plurality of lenses 570. In various embodiments, each of the plurality of lenses 570 may be formed in a symmetrical shape with respect to the optical axis OA. In embodiments of the disclosure, the direction of the optical axis OA may include the first optical axis direction ① and the second optical axis direction ②. The first optical axis direction ① may be defined as a direction toward an object OBJ, and the second optical axis direction ② may be defined as a direction toward the image sensor 591.

In an embodiment, the plurality of lenses 570 may include the first lens 510, a second lens 520, a third lens 530, a fourth lens 540, a fifth lens 550, and a sixth lens 560, which are sequentially disposed one on another in the direction from the object OBJ toward the image sensor 591. The first lens 510 may be closest to the object OBJ, and the sixth lens 560 may be disposed closest to the image sensor 591. The second lens 520 to the fifth lens 550 may be sequentially disposed between the first lens 510 and the sixth lens 560. For example, the first lens 510 may be disposed closest to the display. According to an embodiment, as shown in FIG. 9A, the plurality of lenses 570 includes six lenses. However, this is illustrative, the number of lenses included in the camera module 500 is not limited to those shown in FIG. 9A.

In an embodiment, the plurality of lenses 570 may be configured in a way such that the outer diameters of the respective lenses are increased in the direction from the object OBJ toward the image sensor 591 (e.g., in the second optical axis direction ②). For example, as shown in FIGS. 9A and 9B, the first lens 510 may have the smallest outer diameter, the sixth lens 560 may have the largest outer diameter, and the outer diameters may be increased in the sequence of the second lens 520, the third lens 530, the fourth lens 540, and the fifth lens 550. However, the outer diameters of the plurality of lenses 570 are not limited to those shown in FIGS. 9A and 9B.

In an embodiment, the plurality of lenses 570 may include effective portions through which external light passes. The remaining portions other than the effective portions may be defined as peripheral portions. For example, the effective portions may be portions that are not hidden by the spacers S1 and S2, and the peripheral portions may be portions that partially overlap the spacers S1 and S2. The effective portions may be formed or defined by effective areas of the lens surfaces of the plurality of lenses 570, respectively. Light passing through the effective portions may be light reflected from the object OBJ. In various embodiments, the light reflected from the object OBJ may be refracted while passing through the lenses 570.

In an embodiment, the spacers S1 and S2 may be disposed between the plurality of lenses 570. The spacers S1 and S2 may be disposed in contact with the peripheral portions of the plurality of lenses 570 disposed adjacent to each other. For example, the spacers S1 and S2 may prevent direct contact between the plurality of lenses 570 and may space the plurality of lenses 570 apart from each other by a predetermined gap.

In an embodiment, the spacers S1 and S2 may be formed in various sizes. For example, the second spacer S2 between the fourth lens 540 and the fifth lens 550 and the second spacer S2 between the fifth lens 550 and the sixth lens 560 may be formed to be thicker than the first spacers S1. The gaps between the lenses disposed adjacent to each other may be adjusted or determined by the thicknesses of the spacers S1 and S2.

In an embodiment, the spacers S1 and S2 may be formed in a ring shape in which an opening area (not illustrated) is defined or formed in a central portion. The spacers S1 and S2 may be configured in a way such that the opening areas are partially aligned with the effective portions of the plurality of lenses 570. External light may pass through the plurality of lenses 570 through the opening areas of the spacers S1 and S2. For example, the optical axis OA may pass through the opening areas of the spacers S1 and S2. In various embodiments, at least one of the plurality of spacers S1 and S2 may function as an aperture stop of the camera module 500.

In an embodiment, the effective areas (e.g., a first effective area 511a to a twelfth effective area 563a) (or, effective diameters) of the lens surfaces (e.g., a first lens surface 511 to a twelfth lens surface 563) of the plurality of lenses 570 may be determined by the spacers S1 and S2. For example, the effective areas (or, the effective diameters) of the respective lens surfaces may be formed or defined by the opening areas of the spacers S1 and S2. The effective areas (e.g., clear apertures) may be defined as areas of the lens surfaces through which the most external light substantially transmits (or, passes) or through which light beams that are central to acquisition of an image pass, and the effective diameters may be defined as the diameters of the effective areas.

For example, the effective areas may refer to partial areas of the lens surfaces for substantially receiving external light when the lens surfaces of the plurality of lenses 570 are viewed in the direction of the optical axis OA. For example, the effective diameters may refer to the lengths of line segments corresponding to sections through which external light passes in imaginary straight lines perpendicular to the optical axis OA on the lens surfaces. The optical axis OA may pass through the centers of the effective areas.

In an embodiment, each of the plurality of lenses 570 may include an object-side lens surface facing toward the object OBJ and a sensor-side lens surface facing toward the image sensor 591. For example, the object-side lens surface may refer to a lens surface facing the first optical axis direction ①, and the sensor-side lens surface may refer to a lens surface facing the second optical axis direction ②. For example, at least some of the plurality of lenses 570 may be configured in a way such that the size (the effective diameter) of the effective area of the object-side lens surface and the size (the effective diameter) of the effective area of the sensor-side lens surface differ from each other.

In an embodiment, the first lens 510 may include the first lens surface 511 facing toward the object OBJ and the second lens surface 513 facing toward the image sensor 591. The second lens 520 may include the third lens surface 521 facing toward the object OBJ and the fourth lens surface 523 facing toward the image sensor 591. The third lens 530 may include the fifth lens surface 531 facing toward the object OBJ and the sixth lens surface 533 facing toward the image sensor 591. The fourth lens 540 may include the seventh lens surface 541 facing toward the object OBJ and the eighth lens surface 543 facing toward the image sensor 591. The fifth lens 550 may include the ninth lens surface 551 facing toward the object OBJ and the tenth lens surface 553 facing toward the image sensor 591. The sixth lens 560 may include the eleventh lens surface 561 facing toward the object OBJ and the twelfth lens surface 563 facing toward the image sensor 591.

In an embodiment, the first lens surface 511 of the first lens 510 may include the first effective area 511a, and the second lens surface 513 of the first lens 510 may include the second effective area 513a. For example, the first effective area 511a may be a partial area of the first lens surface 511 that does not overlap the spacers S1 and S2 such that external light passes therethrough, and the second effective area 513a may be a partial area of the second lens surface 513 that does not overlap the spacers S1 and S2 such that external light passes therethrough. According to an embodiment, as shown in FIGS. 9A and 9B, the first effective area 511a of the first lens surface 511 may be larger than the second effective area 513a of the second lens surface 513. However, the embodiment described above is illustrative, and the disclosure is not limited thereto.

In an embodiment, the third lens surface 521 of the second lens 520 may include the third effective area 521a, and the fourth lens surface 523 of the second lens 520 may include the fourth effective area 523a. For example, the third effective area 521a may be a partial area of the third lens surface 521 that does not overlap the spacers S1 and S2, and the fourth effective area 523a may be a partial area of the fourth lens surface 523 that does not overlap the spacers S1 and S2. According to the illustrated embodiment, the third effective area 521a of the third lens surface 521 may be larger than the fourth effective area 523a of the fourth lens 523, and the third effective area 521a may be formed in substantially the same size as the second effective area 513a. However, the embodiment described above is illustrative, and the disclosure is not limited thereto.

In an embodiment, the fifth lens surface 531 of the third lens 530 may include the fifth effective area 531a, and the sixth lens surface 533 of the third lens 530 may include the sixth effective area 533a. For example, the fifth effective area 531a may be a partial area of the fifth lens surface 531 that does not overlap the spacers S1 and S2, and the sixth effective area 533a may be a partial area of the sixth lens surface 533 that does not overlap the spacers S1 and S2. According to the illustrated embodiment, the fifth effective area 531a of the fifth lens surface 531 may be smaller than the sixth effective area 533a of the sixth lens 533, and the fifth effective area 531a may be formed in substantially the same size as the fourth effective area 523a. However, the embodiment described above is illustrative, and the disclosure is not limited thereto.

In an embodiment, the seventh lens surface 541 of the fourth lens 540 may include the seventh effective area 541a, and the eighth lens surface 543 of the fourth lens 540 may include the eighth effective area 543a. For example, the seventh effective area 541a may be a partial area of the seventh lens surface 541 that does not overlap the spacers S1 and S2, and the eighth effective area 543a may be a partial area of the eighth lens surface 543 that does not overlap the spacers S1 and S2. According to the illustrated embodiment, the seventh effective area 541a of the seventh lens surface 541 may be smaller than the eighth effective area 543a of the eighth lens 543, and the seventh effective area 541a may be formed in substantially the same size as the sixth effective area 533a. However, the embodiment described above is illustrative, and the disclosure is not limited thereto.

In an embodiment, the ninth lens surface 551 of the fifth lens 550 may include the ninth effective area 551a, and the tenth lens surface 553 of the fifth lens 550 may include the tenth effective area 553a. For example, the ninth effective area 551a may be a partial area of the ninth lens surface 551 that does not overlap the spacers S1 and S2, and the tenth effective area 553a may be a partial area of the tenth lens surface 553 that does not overlap the spacers S1 and S2. According to the illustrated embodiment, the ninth effective area 551a of the ninth lens surface 551 may be smaller than the tenth effective area 553a of the tenth lens surface 553. As the different spacers S1 and S2 are disposed on the ninth lens surface 551 of the fifth lens 550 and the eighth lens surface 543 of the fourth lens 540, respectively, the sizes of the ninth effective area 551a and the eighth effective area 543a may differ from each other. However, the illustrated embodiment is illustrative, and the disclosure is not limited thereto.

In an embodiment, the eleventh lens surface 561 of the sixth lens 560 may include the eleventh effective area 561a, and the twelfth lens surface 563 of the sixth lens 560 may include the twelfth effective area 563a. For example, the eleventh effective area 561a may be a partial area of the eleventh lens surface 561 that does not overlap the spacers S1 and S2, and the twelfth effective area 563a may be an outer-diameter area of the twelfth lens surface 563. According to the illustrated embodiment, the eleventh effective area 561a of the eleventh lens surface 561 may be smaller than the twelfth effective area 563a of the twelfth lens surface 563. As the different spacers S1 and S2 are disposed on the eleventh lens surface 561 of the sixth lens 560 and the tenth lens surface 553 of the fifth lens 550, respectively, the sizes of the eleventh effective area 561a and the tenth effective area 553a may differ from each other. However, the embodiment described above is illustrative, and the disclosure is not limited thereto.

In an embodiment, the effective areas (e.g., the first effective area 511a to the twelfth effective area 563a) of the lens surfaces (e.g., the first lens surface 511 to the twelfth lens surface 563) of the plurality of lenses 570 may be aligned in the direction of the optical axis OA. The effective areas may have the optical axis OA as the central axes thereof. The centers of the effective areas may be located on the optical axis OA. Each of the effective areas may have a symmetrical shape with respect to the optical axis OA. The effective diameters of the lens surfaces of the plurality of lenses 570 may be understood as lengths obtained by measuring the effective areas of the lens surfaces in a direction substantially perpendicular to the optical axis OA when the sections of the plurality of lenses 570 are viewed based on FIG. 9B.

According to an embodiment, reference areas 571 and 573 serving as criteria for a condition for applying an ultra-low reflective coating to the plurality of lenses 570 of the camera module 500 may be defined. The reference areas 571 and 573 may include a first reference area 571 and a second reference area 573 formed to be smaller than the first reference area 571.

In an embodiment, the first reference area 571 of the plurality of lenses 570 may be substantially the same area as the smallest effective area among the effective areas of the lens surfaces of the plurality of lenses 570. For example, the size of the first reference area 571 may be equal to the minimum effective diameter of the plurality of lenses 570. According to the illustrated embodiment, the first reference area 571 may refer to an area that has substantially the same size (or, diameter) as the fourth effective area 523a of the fourth lens surface 523 of the second lens 520 and the fifth effective area 531a of the fifth lens surface 531 of the third lens 530 and overlaps the fourth effective area 523a and the fifth effective area 531a in the direction of the optical axis OA. Likewise to the centers of the effective areas, the center of the first reference area 571 may be located on the optical axis OA. However, the embodiment described above is illustrative. The plurality of lenses 570 may be modified in various shapes, and the first reference area 571 may be determined depending on the shapes of the plurality of lenses 570.

In an embodiment, the second reference area 573 of the plurality of lenses 570 may be an area that has the same center as the first reference area 571 and has a size (or, a diameter) equal to a half of the size (or, the diameter) of the first reference area 571. For example, likewise to the center of the first reference area 571, the center of the second reference area 573 may be located on the optical axis OA. The diameter of the second reference area 573 may be about 0.5 times the diameter of the first reference area 571. For example, the length measured from the optical axis OA to the periphery of the first reference area 571 in the direction perpendicular to the optical axis OA (e.g., the radius r1 of the first reference area 571) may be two times the length measured from the optical axis OA to the periphery of the second reference area 573 in the direction perpendicular to the optical axis OA (e.g., the radius r2 of the second reference area 573).

According to embodiments of the disclosure, an ultra-low reflective coating may be applied to a lens surface whose angle of slope satisfies a specified condition based on the first reference area 571 and the second reference area 573, among the lens surfaces of the plurality of lenses 570. For example, a coating layer may be formed on a lens surface satisfying the specified condition among the lens surfaces of the plurality of lenses 570.

In an embodiment, a coating layer may be formed on a lens surface satisfying a first coating condition including Conditional Expressions 1 and 2 below. For example, a coating layer may be formed on a lens surface simultaneously satisfying Conditional Expressions (or inequations) 1 and 2 below.

[Conditional Expression 1]

$$-10° \leq AS1 \leq 10°$$

[Conditional Expression 2]

$$-5° \leq AS2 \leq 5°$$

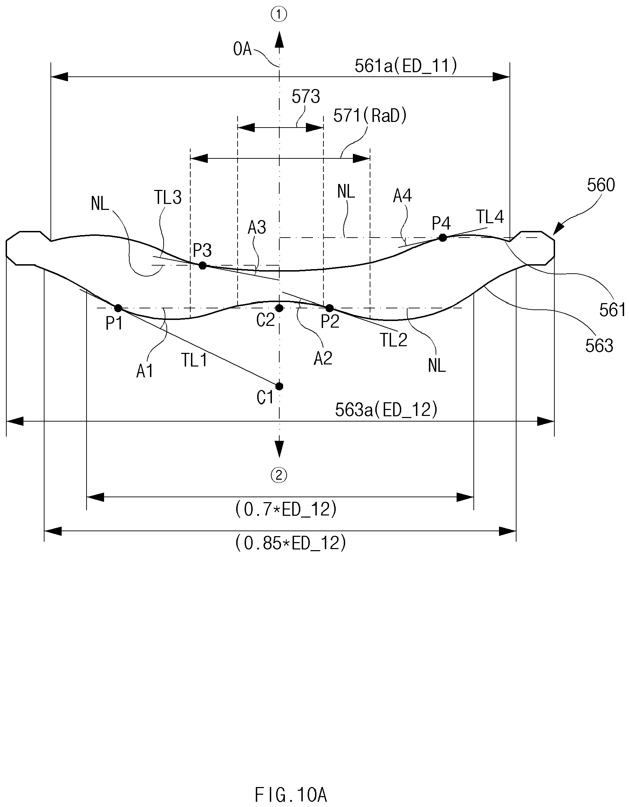

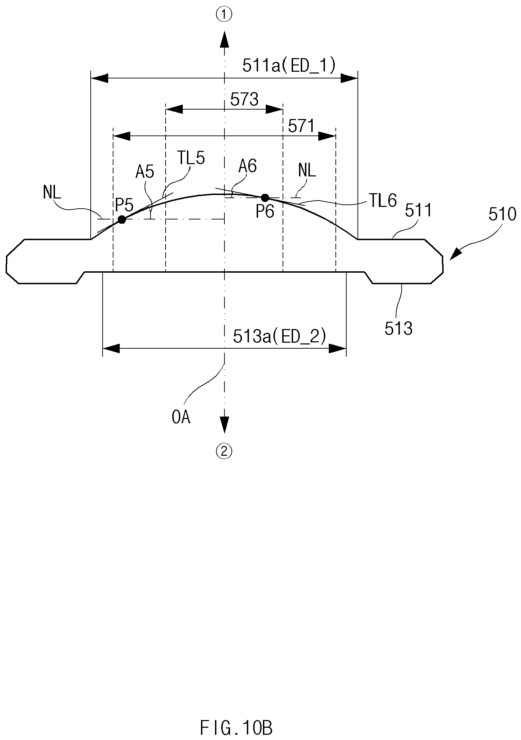

In Conditional Expression 1, AS1 represents the angle of slope of a partial area of the lens surface of each of the plurality of lenses 570 that is included in the first reference area 571. For example, AS1 may be interpreted as the angle of slope of a partial area of the lens surface that is located in the first reference area 571 or overlaps the first reference area 571. The angle of slope of the lens surface may refer to the angle that the lens surface forms with a straight line substantially perpendicular to the optical axis OA. For example, the angle of slope of the lens surface may be defined as the angle that a tangent line passing through one point of the lens surface forms with the straight line perpendicular to the optical axis OA. The angle of slope formed by the straight line perpendicular to the optical axis OA and the direction toward the image sensor 591 (e.g., the second optical axis direction ②) may be defined by a positive (+) magnitude or a positive (+) sign, and the angle of slope formed by the straight line perpendicular to the optical axis OA and the direction toward the object OBJ (e.g., the first optical axis direction ①) may be defined by a negative (-) magnitude or a negative (+) sign. The angle of slope of the lens surface will be described below in more detail with reference to FIGS. 10A and 10B.

In Conditional Expression 2, AS2 represents the angle of slope of a partial area of the lens surface of each of the plurality of lenses 570 that is included in the second reference area 573. For example, AS2 may be interpreted as the angle of slope of a partial area of the lens surface that is located in the second reference area 573 or overlaps the second reference area 573.

In an embodiment, a lens surface on which a coating layer is formed may be a surface simultaneously satisfying Conditional Expressions 1 and 2. For example, a coating layer may be formed by applying an ultra-low reflective coating to the entire area of a specific lens surface simultaneously satisfying Conditional Expressions 1 and 2. When the specific lens surface does not satisfy any one of Conditional Expression 1 or Conditional Expression 2, it may be interpreted that the specific lens surface does not satisfy the first coating condition. For example, based on the lens surface of one of the plurality of lenses 570, the angle of slope of a partial area (or, one point) of the lens surface that is located in the first reference area 571 may be greater than +10° or smaller than -10°, and in this case, the corresponding lens surface may be a lens surface that does not satisfy the first coating condition. Furthermore, based on the lens surface of one of the plurality of lenses 570, the angle of slope of a partial area (or, one point) of the lens surface that is located in the second reference area 573 may be greater than 5° or smaller than -5°, and in this case, the corresponding lens surface may be a lens surface that does not satisfy the first coating condition.

In an embodiment, a coating layer may be formed on a lens surface satisfying a second coating condition including Conditional Expressions 3 and 4 below. For example, a coating layer may be formed on a lens surface simultaneously satisfying Conditional Expressions (or inequations) 3 and 4 below.

[Conditional Expression 3]

$$ED \geq 1.5 \times RaD$$

[Conditional Expression 4]

$$15° \leq AS3 \leq 40°$$

In Conditional Expression 3, RaD represents the diameter of the first reference area 571, and ED represents the effective diameter of each of the lens surfaces (e.g., the first lens surface 511 to the twelfth lens surface 563). ED may refer to the diameter of each of the effective areas (e.g., the first effective area 511a to the twelfth effective area 563a) of the lens surfaces. For example, RaD may be equal to the smallest effective diameter among the effective diameters of the lens surfaces of the plurality of lenses 570. According to the illustrated embodiment, RaD may be equal to the diameter of the fourth effective area 523a of the fourth lens surface 523 and/or the diameter of the fifth effective area 531a of the fifth lens surface 531. Conditional Expression 3 may be interpreted as a condition for determining a lens surface whose effective area has a diameter (an effective diameter) 1.5 times greater than the diameter of the first reference area 571. According to the illustrated embodiment, the fourth lens surface 523 and the fifth lens surface 531 that have the minimum effective diameter may not satisfy Conditional Expression 3. However, the embodiment described above is illustrative, and the disclosure is not limited thereto.

In Conditional Expression 4, AS3 represents the angle of slope of a partial area of the lens surface of each of the plurality of lenses 570 that is included in an area of 70% to 85% of the effective area. For example, AS3 may be interpreted as the angle of slope of a partial area included between a first reduced area whose diameter is 0.7 times the effective diameter of the lens surface and a second reduced area whose diameter is 0.85 times the effective diameter of the lens surface. The first reduced area and the second reduced area of each lens surface may have the same center as the effective area of the lens surface, the diameter of the first reduced area may be $0.7 \times ED$, and the diameter of the second reduced area may be expressed by $0.85 \times ED$.

In an embodiment, a lens surface on which a coating layer is formed may simultaneously satisfy Conditional Expressions 3 and 4. For example, a coating layer may be formed by applying an ultra-low reflective coating to the entire area (or, the effective area) of a specific lens surface simultaneously satisfying Conditional Expressions 3 and 4. When the specific lens surface does not satisfy any one of Conditional Expression 3 or Conditional Expression 4, it may be interpreted that the specific lens surface does not satisfy the second coating condition. For example, based on the lens surface of one of the plurality of lenses 570, the effective diameter of the lens surface may not be 1.5 times greater than the diameter of the first reference area 571, and in this case, the corresponding lens surface may be a lens surface that does not satisfy the second coating condition. Furthermore, based on the lens surface of one of the plurality of lenses 570, the angle of slope of a partial area (or, one point) of the lens surface that is located between the first reduced area (e.g., an area having a diameter of $0.7 \times ED$) and the second reduced area (e.g., an area having a diameter of $0.85 \times ED$.) may be smaller than 15° or greater than 40°, and in this case, the corresponding lens surface may be a lens surface that does not satisfy the second coating condition.

According to an embodiment, a coating layer may be formed on a lens surface satisfying at least one of the first coating condition including Conditional Expressions 1 and 2 or the second coating condition including Conditional Expressions 3 and 4. For example, when a specific lens surface satisfies the first coating condition, a coating layer may be formed on the corresponding lens surface even though the lens surface does not satisfy the second coating condition. In contrast, when a specific lens surface satisfies the second coating condition, a coating layer may be formed on the corresponding lens surface even though the lens surface does not satisfy the first coating condition.

In an embodiment, a coating layer may be formed when the first lens surface 511 of the first lens 510 satisfies a third coating condition including Conditional Expression 5 below.

[Conditional Expression 5]

$$TTL/ImgD \leq 0.65$$

In Conditional Expression 5, TTL represents the distance between the first lens surface 511 of the first lens 510 and the image sensor 591, and ImgD represents the length of the diagonal line of the image sensor 591. For example, TTL, which is the length between the center of the first lens surface 511 closest to the object OBJ and an imaging surface 591a of the image sensor 591, may refer to the maximum distance between the imaging surface 591a of the image sensor 591 and the first lens surface 511 that is measured in the direction of the optical axis OA. In an embodiment, when Conditional Expression 5 is satisfied, a coating layer may be formed on the entire area (or, the first effective area 511a) of the first lens 511 by applying an ultra-low reflective coating to the first lens surface 511 of the first lens 510.

In an embodiment, total track length (TTL) represents the distance from one surface of the camera module 500 to the upper surface (image plane) 591a of the image sensor 591. For example, TTL may refer to the total optical path length or the total length of a lens assembly. For example, TTL may be the height from the lens surface 511 of the first lens 510 that faces toward the object OBJ (e.g., the plane of incidence of the first lens 510) to the imaging surface 591a of the image sensor 591. In an embodiment, ImgD may referto the length of the diagonal line on the upper surface 591a (or, the imaging surface) of the image sensor 591.

In various embodiments, where an optical filter (e.g., an infrared cut-off filter or a glass cover) is provided on the optical axis OA, TTL may apply an air conversion value thereto. For example, when the optical filter has a refractive index of n and a thickness of d, $(1-(1/n))\times d$ may be applied to calculation of TTL.

According to an embodiment, a coating layer may be formed when the first lens surface 511 of the first lens 510 satisfies at least one of Conditional Expression 5, the first coating condition (e.g., Conditional Expressions 1 and 2), or the second coating condition (e.g., Conditional Expressions 3 and 4). For example, when the first lens surface 511 satisfies Conditional Expression 5, a coating layer may be formed on the first lens surface 511 even though the first lens surface 511 does not satisfy the first coating condition and the second coating condition. In another example, when the first lens surface satisfies the first coating condition, a coating layer may be formed on the first lens surface 511 even though the first lens surface 511 does not satisfy the second coating condition and Conditional Expression 5.

Hereinafter, a condition in which a coating layer is formed will be described with reference to FIGS. 10A and 10B together with FIGS. 9A and 9B, with the first lens 510 and the sixth lens 560 among the plurality of lenses 570 as an example.

FIG. 10A is a sectional view of the sixth lens of the camera module according to an embodiment. FIG. 10B is a sectional view of the first lens of the camera module according to an embodiment.

Referring to FIGS. 9A to 10B, the camera module 500 according to an embodiment may include the plurality of lenses 570 aligned with respect to the optical axis OA, and the first reference area 571 and the second reference area 573 may be defined for the plurality of lenses 570.

The sixth lens 560 illustrated in FIG. 10A may be referred to as the sixth lens 560 of FIGS. 9A and 9B, and the first lens 510 illustrated in FIG. 10B may be referred to as the first lens 510 of FIGS. 9A and 9B.

Referring to FIG. 10A, the sixth lens 560 may include the eleventh lens surface 561 facing the first optical axis direction ① and the twelfth lens surface 563 facing the second optical axis direction ②. The eleventh lens surface 561 may include the eleventh effective area 561a (e.g., an eleventh effective diameter ED_11), and the twelfth lens surface 563 may include the twelfth effective area 563a (e.g., a twelfth effective diameter ED_12). For example, the eleventh effective area 561a and the twelfth effective area 563a may be larger than the first reference area 571.

In an embodiment, the angle of slope of a lens surface, which represents the shape of the lens surface, may refer to the angle formed by a normal line NL perpendicular to the optical axis OA (e.g., the normal line of the optical axis OA) and the lens surface. For example, the angle of slope of the lens surface may be defined as the angle formed by the normal line perpendicular to the optical axis OA and a tangent line of the lens surface that extends in the direction of the optical axis OA. The size and/or direction of the angle of slope of the lens surface may represent the degree to which the lens surface is convex toward the object or the degree to which the lens surface is convex toward the image sensor. An angle of slope formed in the second optical axis direction ② (e.g., the direction toward the image sensor) with respect to the normal line NL may have a positive (+) sign, and an angle of slope formed in the first optical axis direction ① (e.g., the direction toward the object) with respect to the normal line NL may have a negative (-) sign. For example, a lens surface having a positive (+) angle of slope may have a shape inclined toward the object as being farther away from the optical axis OA, e.g., may be closer to the object as being farther away from the optical axis OA, and a lens surface having a negative (-) angle of slope may have a shape inclined toward the image sensor as being farther away from the optical axis OA, e.g., may be closer to the image sensor as being farther away from the optical axis OA. Hereinafter, the angle of slope of a lens surface will be described based on the lens surfaces 561 and 563 of the sixth lens 560. However, the description may be identically applied to the lens surfaces of the other lenses.

In an embodiment, the angles of slope of the lens surfaces 561 and 563 of the sixth lens 560 may be defined for a plurality of points on the lens surfaces 561 and 563. For example, the eleventh lens surface 561 and the twelfth lens surface 563 of the sixth lens 560 may partially include a curved line (or, a curved surface).

In an embodiment, a first angle of slope A1 of the twelfth lens surface 563 that corresponds to a first point P1 may be defined as an angle that is formed by the normal line NL perpendicular to the optical axis OA and a tangent line TL1 passing through the first point P1 and that faces the optical axis OA. A second angle of slope A2 of the twelfth lens surface 563 that corresponds to a second point P2 may be defined as an angle that is formed by the normal line perpendicular to the optical axis OA and a tangent line TL2 passing through the second point P2 and that faces the optical axis OA. For example, as the normal line NL perpendicular to the optical axis OA and the tangent line TL1 that pass through the first point P1 intersect the optical axis OA at different points, a triangle having the first point P1, a first intersection C1, and a second intersection C2 as vertexes may be defined, and the first angle of slope A1 may refer to the included angle between the line segment P1-C1 and the line segment P1-C2.

In an embodiment, based on the normal line NL extending perpendicular to the optical axis OA to pass through the points of the twelfth lens surface 563, an angle of slope formed in the direction toward the image sensor 591 (e.g., the second optical axis direction ②)

may be defined as a positive (+) angle, and an angle of slope formed in the direction toward the object OBJ (e.g., the first optical axis direction ①) may be defined as a negative (-) angle. For example, the first angle of slope A1 may have a positive (+) sign, and the second angle of slope A2 may have a negative (-) sign. As the first point P1 is a portion of an area of the twelfth lens surface 563 inclined toward the object OBJ as being farther away from the optical axis OA, the first angle of slope A1 may have a positive (+) magnitude, and as the second point P2 is a portion of an area of the twelfth lens surface 563 inclined toward the image sensor 591 as being farther away from the optical axis OA, the second angle of slope A2 may have a negative (-) magnitude.

In an embodiment, a third angle of slope A3 of the eleventh lens surface 561 that corresponds to a third point P3 may be defined as an angle that is formed by the normal line NL perpendicular to the optical axis OA and a tangent line TL3 passing through the third point P3 and that faces the optical axis OA. A fourth angle of slope A4 of the eleventh lens surface 561 that corresponds to a fourth point P4 may be defined as an angle that is formed by the normal line NL perpendicular to the optical axis OA and a tangent line TL4 passing through the fourth point P4 and that faces the optical axis OA. Based on the normal line NL extending perpendicular to the optical axis OA to pass through the points of the eleventh lens surface 561, an angle of slope formed in the second optical axis direction ② may be defined as a positive (+) angle, and an angle of slope formed in the first optical axis direction ① may be defined as a negative (-) angle. For example, the third angle of slope A3 and the fourth angle of slope A4 may have a positive (+) sign. As the third point P3 and the fourth point P4 are portions of areas of the eleventh lens surface 561 inclined toward the object OBJ as being farther away from the optical axis OA, the third angle of slope A3 and the fourth angle of slope A4 may have a positive (+) magnitude.

In an embodiment, forming a coating layer when the first coating condition is satisfied may refer to forming a coating layer on the eleventh lens surface 561 or the twelfth lens surface 563 when the angle of slope of an area of the eleventh lens surface 561 or the twelfth lens surface 563 that is located in the first reference area 571 (e.g., the second angle of slope A2 or the third angle of slope A3) is in a range from -10° to +10° (e.g., Conditional Expression 1) and the angle of slope of an area of the eleventh lens surface 561 or the twelfth lens surface 563 that is located in the second reference area 573 is in a range from -5° to +5° (e.g., Conditional Expression 2). For example, to satisfy the first coating condition, the angles of slope of several points located in the second reference area 573 are in the range from -5° to +5° and the angles of slope of several points (e.g., the second point P2 and the third point P3) located in the first reference area 571 on the eleventh lens surface 561 or the twelfth lens surface 563 are in the range from -10° to +10°.

In an embodiment, forming a coating layer when the second coating condition is satisfied may refer to forming a coating layer on the eleventh lens surface 561 or the twelfth lens surface 563 when the diameter ED_11 or ED_12 of the effective area 561a or 563a of the eleventh lens surface 561 or the twelfth lens surface 563 is 1.5 times greater than the diameter RaD of the first reference area 571 and the angle of slope of a partial area of the eleventh lens surface 561 or the twelfth lens surface 563 that is located in an area of 70% to 85% of the effective area 561a or 563a ranges from +15° to +40° (e.g., Conditional Expression 4). For example, to satisfy the second coating condition based on the twelfth lens surface 563, the diameter (e.g., the twelfth effective diameter ED_12) of the twelfth effective area 563a of the twelfth lens surface 563 is 1.5 times greater than the diameter RaD of the first reference area 571 (e.g., $1.5 \times RaD \leq ED\_12$), and the angles of slope of several points located in an area between the first reduced area $(0.7 \times ED\_12)$ and the second reduced area $(0.85 \times ED\_12)$ have to range from +15° to +40°.

Referring to FIG. 10B, the first lens 510 may include the first lens surface 511 facing the first optical axis direction ① and the second lens surface 513 facing the second optical axis direction ②. The first lens surface 511 may include the first effective area 511a (e.g., a first effective diameter ED_1), and the second lens surface 513 may include the second effective area 513a (e.g., a second effective diameter ED_2). For example, the first effective area 511a and the second effective area 513a may be larger than the first reference area 571.

In an embodiment, a fifth angle of slope A5 of the first lens surface 511 that corresponds to a fifth point P5 may be defined as an angle that is formed by the normal line NL perpendicular to the optical axis OA and a tangent line TL5 passing through the fifth point P5 and that faces the optical axis OA. A sixth angle of slope A6 of the second lens surface 513 that corresponds to a sixth point P6 may be defined as an angle that is formed by the normal line NL perpendicular to the optical axis OA and a tangent line TL6 passing through the sixth point P6 and that faces the optical axis OA. For example, the fifth angle of slope A5 and the sixth angle of slope A6 may have a negative (-) sign. As the fifth point P5 and the sixth point P6 are portions of areas of the first lens surface 511 inclined toward the image sensor 591 as being farther away from the optical axis OA, the fifth angle of slope A5 and the sixth angle of slope A6 may have a negative (-) magnitude.

In an embodiment, a coating layer may be formed when the first lens surface 511 satisfies any one of the first coating condition, the second coating condition, and the third coating condition (e.g., Conditional Expression 5).

According to the illustrated embodiment, the first effective diameter ED_1 of the first lens surface 511 may be less than 1.5 times the diameter RaD of the first reference area 571, and the first lens surface 511 may not satisfy Conditional Expression 3 of the second coating condition. Accordingly, when the first lens surface 511 satisfies any one of the first coating condition and the third coating condition, a coating layer may be formed. However, the shape of the first lens surface 511 of the first lens 510 illustrated in FIG. 10B is illustrative and is not limited to the illustrated embodiment.

According to the illustrated embodiment, a partial area of the second lens surface 513 included in the second effective area 513a may be substantially perpendicular to the optical axis OA. For example, the angle of slope of a partial area of the second lens surface 513 located in the second effective area 513a may be 0°. Accordingly, as the second lens surface 513 satisfies the first coating condition (e.g., Conditional Expressions 1 and 2), a coating layer may be formed on the entire area (or, the second effective area 513a). However, the shape of the second lens surface 513 of the first lens 510 illustrated in FIG. 10B is illustrative and is not limited to the illustrated embodiment.

Based on the eleventh lens surface 561 and the twelfth lens surface 563 of the sixth lens 560 and the first lens surface 511 and the second lens surface 513 of the first lens 510, the first coating condition and the second coating condition have been described with reference to FIGS. 10A and 10B. However, the description has been made with the first lens 510 and the sixth lens 560 among the plurality of lenses 570 as an example and may be identically applied to the other lenses. Furthermore, the number and/or shape of the plurality of lenses 570 illustrated in FIGS. 9A to 10B is illustrative and may be diversely modified without being limited to the illustrated embodiment.

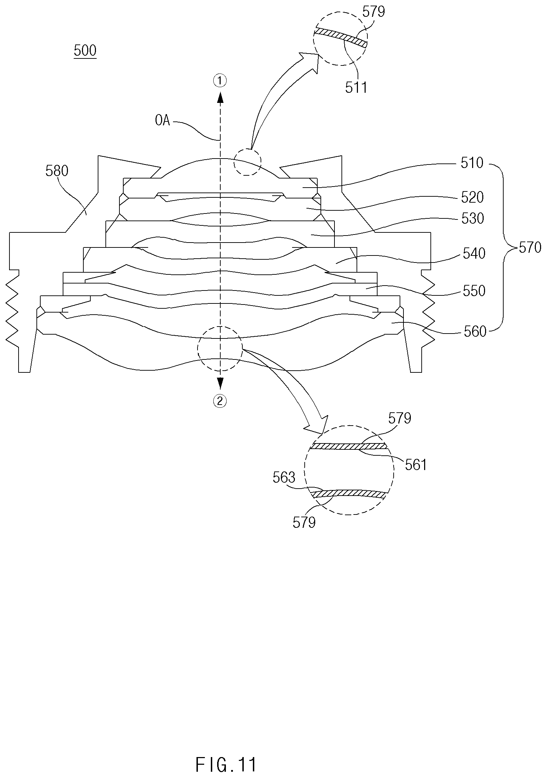

FIG. 11 is a sectional view of a portion of the camera module according to an embodiment.

Referring to FIG. 11, the camera module 500 according to an embodiment may include a coating layer 579 formed on at least a part of the lens surfaces of the plurality of lenses 570 (e.g., the first lens surface 511 to the twelfth lens surface 563 of FIGS. 9A and 9B).

In an embodiment, on a path along which a flare in a pixel pattern shape occurs (e.g., refer to FIG. 7), the coating layer 579 formed on the lens surface may lower the strength of the flare by reducing primary reflection of light incident on the plurality of lenses 570 by the lens surface.

In an embodiment, the coating layer 579 may be formed on a lens surface satisfying a specified condition. For example, the coating layer 579 may be formed on a lens surface that satisfies the first coating condition (e.g., Conditional Expressions 1 and 2), the second coating condition (e.g., Conditional Expressions 3 and 4), or the third coating condition (e.g., Conditional Expression 5) described above with reference to FIGS. 9A to 10B. A lens surface that corresponds to the first coating condition, the second coating condition, and the third coating condition may be interpreted as a lens surface that causes occurrence of a flare. For example, a lens surface satisfying the first coating condition, the second coating condition, and the third coating condition may be a lens surface that forms an optical path along which light transmitting through a display (e.g., the display 422 of FIG. 7) is firstly reflected and then secondly reflected by the rear surface of the display 422 and is incident on the image sensor. In embodiments of the disclosure, the strength of a flare may be reduced by forming the coating layer 579 on the lens surface causing the flare by forming the optical path as described above.

In an embodiment, the first lens 510 may include the first lens surface 511 facing the first optical axis direction ①. The coating layer 579 may be formed on the first lens surface 511 when the first lens surface 511 satisfies any one of the first coating condition, the second coating condition, and the third coating condition. As described above with reference to FIGS. 9A and 9B, the effective diameter of the first lens surface 511 (e.g., the first effective diameter ED_1 of FIG. 10B) may not be 1.5 times or more than the diameter of the first reference area 571 of the plurality of lenses 570, and in this case, the second coating condition may not be satisfied. However, the shape of the first lens 510 shown in FIG. 11 is illustrative and is not limited thereto.

In an embodiment, the sixth lens 560 may include the eleventh lens surface 561 facing the first optical axis direction ① and the twelfth lens surface 563 facing the second optical axis direction ②. The coating layer 579 may be formed on the eleventh lens surface 561 when the eleventh lens surface 561 satisfies any one of the first coating condition and the second coating condition. The coating layer 579 may be formed on the twelfth lens surface 563 when the twelfth lens surface 563 satisfies any one of the first coating condition and the second coating condition.

In an embodiment, the coating layer 579 on the lens surface may allow the reflectance of the lens surface for light of a specified wavelength range to be less than or equal to a predetermined value. For example, the coating layer 579 may be implemented by ultra-low reflective coating technology.

In an embodiment, the average reflectance (R_avg) of the lens surface with the coating layer 570 formed thereon for light having a wavelength range of about 480 nm to about 630 nm may be about 0.25% or less (e.g., R_avg ≤ 0.25%). However, the disclosure is not limited thereto.

In an embodiment, the maximum reflectance (R_max) of the lens surface with the coating layer 570 formed thereon for light having a wavelength range of about 480 nm to about 630 nm may be about 0.35% or less (e.g., R_avg ≤ 0.35%). However, the disclosure is not limited thereto.

In an embodiment, the reflectance deviation (R_dev) of the lens surface with the coating layer 570 formed thereon for light having a wavelength range of about 450 nm to about 630 nm may be about 0.25% or less (e.g., R_dev ≤ 0.25%). However, the disclosure is not limited thereto.

Embodiments in which the ultra-low reflective coating layer is applied to the under-display camera type camera module 430 as illustrated in FIG. 6 are primarily described. However, the coating layer 579 described with reference to FIGS. 9A, 9B, 10A, 10B, and 11 is not limited to being applied to an under display camera and may be applied to various types of cameras included in an electronic device (e.g., the electronic device 101 of FIG. 1, the electronic device 300 of FIG. 4, or the electronic device 400 of FIG. 5). For example, the coating layer 579 that corresponds to the coating conditions (e.g., Conditional Expressions 1 to 5) or the reflection performance (e.g., the average reflectance, the maximum reflectance, or the reflectance deviation) described above may be applied to a rear camera module (e.g., the second camera module 393 of FIG. 4) that receives external light through a camera area (e.g., the rear camera area 384 of FIG. 4) including transparent camera glass. Furthermore, although not illustrated, the coating layer 579 may be applied to a front camera module to which a notch or a punch hole is applied.

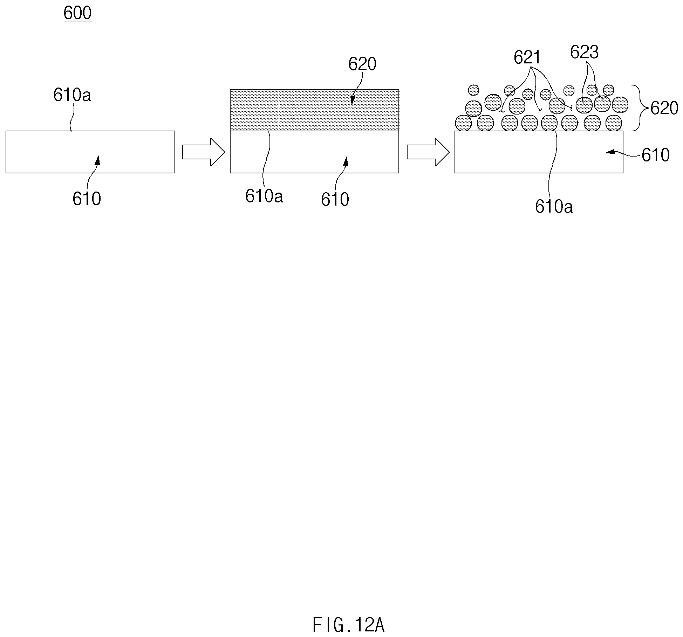

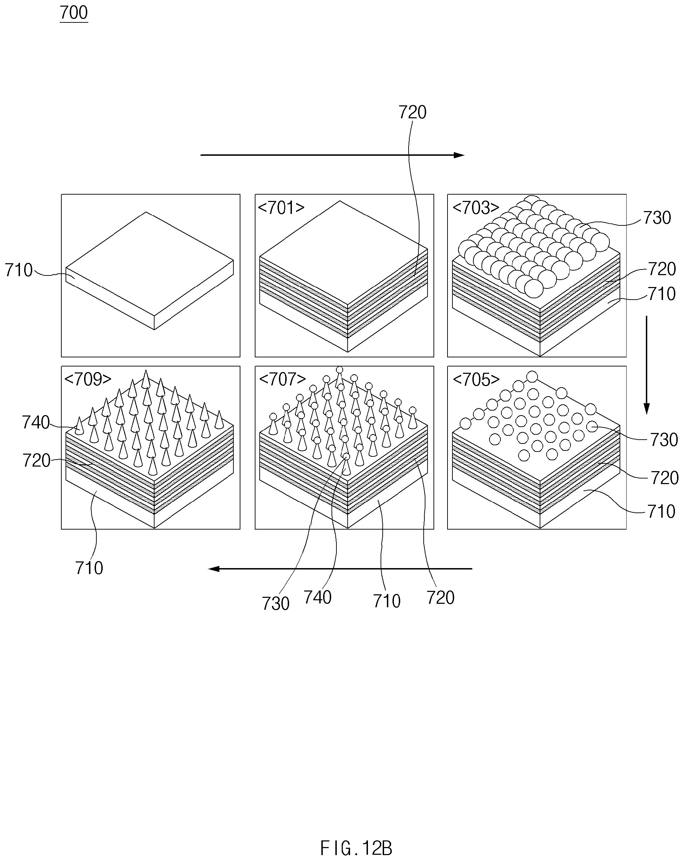

FIG. 12A illustrates a method of forming a coating layer on a lens surface of a camera module according to an embodiment. FIG. 12B illustrates a method of forming a coating layer on a lens surface of a camera module according to an embodiment.

Referring to FIG. 12A, a coating layer 620 according to an embodiment (e.g., the coating layer 579 of FIG. 11) may be formed through a porous coating method 600.

In an embodiment, the coating layer 620 may include a porous layer including a porous structure 621. For example, the coating layer 620 may be formed (stacked) on one surface 610a of a lens 610. A plurality of fine pores 621 may be formed in the coating layer 620. The coating layer 620 having the porous structure may implement ultra-low reflection using a difference in density between a coating material 623 and air filling the plurality of pores 621.

In an embodiment, the coating layer 620 having the porous structure may alleviate a sudden change in refractive index between air and the lens 610. The coating layer 620 having the porous structure may be formed to have a refractive index between the refractive index of air and the refractive index of the lens 610. For example, when it is assumed that the refractive index of air is 1 and the refractive index of the lens 610 is 1.5, the coating layer 620 having the porous structure may have a refractive index higher than 1 and lower than 1.5.

In an embodiment, the coating layer 620 having the porous structure may be formed in a way such that the refractive index thereof is gradually changed between the refractive index of air and the refractive index of the lens 610. For example, the coating layer 620 having the porous structure may have a gradually increasing refractive index as being toward the one surface 610a of the lens 610. The refractive index of the coating layer 620 may be decreased as the sizes of the plurality of pores 621 are increased (e.g., as the amount of filled air is increased). For example, as the plurality of pores 621 in the coating layer 620 are formed to be larger while getting closer to the lens 610, the refractive index of a portion close to the lens 610 may be higher than the refractive index of a portion close to air.

Referring to FIG. 12B, a coating layer 720 according to an embodiment may be formed through a nanostructure coating method 700.

In an embodiment, the coating layer 720 may include a fine bumpy structure or uneven structure. For example, the coating layer 720 may be formed on one surface of a lens 710, and a pattern of nano-protrusions 740 having a fine size may be formed on the coating layer 720. The coating layer 720 having the fine bumpy structure may implement ultra-low reflection by preventing specular reflection of light through the nano-protrusions 740. In various embodiments, the structure in which the plurality of nano-protrusions 740 are formed may be referred to as the moth eye structure.

In an embodiment, the coating layer 720 may be formed (stacked) on the one surface of the lens 710 (see 701 in FIG. 12B). According to various embodiments, the coating layer 720 may include a plurality of layers.

In an embodiment, various types of nano-particles 730 may be disposed on the coating layer 720 (see 703 in FIG. 12B). The nano-particles 730 may include one or more types of beaded particles selected from metal particles, silica, and titanium dioxide. For example, one or more types of metal particles selected from silver, copper, silicon, and gold (Au) or particles such as silica (SiO2) or titanium dioxide (TiO2) may be beaded and applied to one surface of the coating layer 720 through a wet process such as spraying, dipping, or pasting.

In an embodiment, the size of the nano-particles 730 may be adjusted (see 705 in FIG. 12B). The size of the nano-particles 730 may be adjusted depending on the size and/or the shape of the nano-protrusions 740. For example, the diameter of the nano-protrusions 740 may be adjusted by adjusting the size of the nano-particles 730, and the gap between the nano-protrusions 740 may be adjusted by adjusting the dispersion of the nano-particles 730.

In an embodiment, etching may be performed on the coating layer 720 by using the nano-particles 730 as an etching mask (see 707 in FIG. 12B). For example, the areas of the coating layer 720 under the nano-particles 730 may remain, and the separation spaces between the nano-particles 730 may be etched. According to various embodiments, the etching may be performed through a reactive ion etching process. Injected oxygen gas may be ionized into reactive oxygen by plasma activated during the reactive ion etching process and may move toward a cathode electrode to etch the coating layer 720. The etching forms a uniform pattern of the nano-protrusions 740 on the coating layer 720 by attacking and etching the spaces between the nano-particles 730 existing on the one surface of the coating layer 720.

In an embodiment, the remaining nano-particles 730 may be removed (see 709 in FIG. 12B). For example, the nano-particles 730 remaining after the etching may be dipped into water, ethanol, or methanol and may be removed through ultrasonic cleaning. As the remaining nano-particles 730 are removed, the coating layer 720 including a uniform pattern of the nano-protrusions 740 may be formed on the one surface of the lens 710. The above-described processes of the nanostructure coating method 700 are illustrative, and the disclosure is not limited thereto.

According to the illustrated embodiment, the nano-protrusions 740 may be formed on the coating layer 720 stacked on the surface of the lens 710. However, without being limited thereto, the nano-protrusions 740 may be directly formed on the surface of the lens 710 according to various embodiments.

An electronic device 300 or 400 according to an embodiment of the disclosure may include a housing 310, a display 330 or 422 that is disposed in the housing to be visually exposed through a front surface of the housing and that includes a panel layer 423 in which a plurality of pixels 4231 are disposed, and a camera module 391, 430, or 500 that includes an image sensor 471 or 591 and a plurality of lenses 570 and that is disposed under the display such that an optical axis OA of the plurality of lenses passes through the panel layer. Each of the plurality of lenses may include an object-side lens surface that faces toward the display and a sensor-side lens surface that faces toward the image sensor. Each of the lens surfaces of the plurality of lenses may be configured such that a coating layer 579 that lowers reflectance is formed on all or part of the lens surface when an angle of slope A1 to A6 of a partial area of the lens surface is within a specified range. The angle of slope may be an angle formed by the lens surface with a normal line NL perpendicular to the optical axis.

In various embodiments, a reference area 571 and 573 that serves as a criterion for a coating condition for formation of the coating layer may be defined for the plurality of lenses. The reference area may include a first reference area 571 that overlaps a minimum effective diameter of the lens surfaces of the plurality of lenses in a direction of the optical axis and a second reference area 573 having the same center as the first reference area and having a diameter 0.5 times a diameter of the first reference area. The coating condition may include a first coating condition including Conditional Expression 1 and Conditional Expression 2. The coating layer may be formed on the lens surface that satisfies the first coating condition.

Conditional Expression 1

$$-10° \leq AS1 \leq 10°$$

Conditional Expression 2

$$-5° \leq AS2 \leq 5°$$

Here, "AS1" represents the angle of slope of a partial area of the lens surface located in the first reference area, and "AS2" represents the angle of slope of a partial area of the lens surface located in the second reference area.

In various embodiments, the coating condition may further include a second coating condition including Conditional Expression 3 and Conditional Expression 4, and the coating layer may be formed on the lens surface that satisfies at least one of the first coating condition or the second coating condition.

Conditional Expression 3

$$ED \geq 1.5×RaD$$

Conditional Expression 4

$$15° \leq AS3 \leq 40°$$

Here, "ED" represents an effective diameter of the lens surface, "RaD" represents the diameter of the first reference area, and "AS3" represents the angle of slope of a partial area of the lens surface located between an area whose diameter is 0.7 times the effective diameter and an area whose diameter is 0.85 times the effective diameter.

In various embodiments, the angle of slope may be defined as an angle that faces the optical axis and that is formed by a tangent line TL1 to TL6 that passes through one point P1 to P6 of the lens surface and a normal line NL that extends perpendicular to the optical axis while passing through the one point.

In various embodiments, the tangent line TL1 that passes through a first point P1 of the lens surface (e.g., the twelfth lens surface 563) may pass through a first intersection C1 on the optical axis, and the normal line perpendicular to the optical axis may pass through a second intersection C2 on the optical axis. The angle of slope A1 corresponding to the first point may be an included angle between a first line segment P1-C1 that connects the first point and the first intersection and a second line segment P1-C2 that connects the first point and the second intersection in a triangle having the first point, the first intersection, and the second intersection as vertexes.

In various embodiments, the angle of slope formed in a direction toward the image sensor with respect to the normal line may have a positive (+) sign, and the angle of slope formed in a direction toward the object with respect to the normal line may have a negative (-) sign.

In various embodiments, the plurality of lenses may include at least three lenses 510, 520, 530, 540, 550, and 560 sequentially disposed one on another along the optical axis in a direction from the object to the image sensor.

In various embodiments, the plurality of lenses may include a first lens 510 located closest to the display or the object. The first lens may include a first lens surface 511 that faces toward the object and a second lens surface 513 that faces toward the image sensor. The coating layer may be formed on an entire area or a partial area of the first lens surface when the first lens surface satisfies Conditional Expression 5.

Conditional Expression 5

$$TTL/ImgD \leq 0.65$$

Here, "TTL" represents a distance between a center of the first lens surface and the image sensor, the distance being measured in a direction of the optical axis, and "ImgD" represents a length of a diagonal line of the image sensor.

In various embodiments, the display may include a first area 422a that overlaps a field of view (FOV) of the camera module and a second area 422b around the first area, and an arrangement density of the plurality of pixels may be lower in the first area than in the second area.

In various embodiments, the first area, when the display is viewed from above or when viewed in a plan view, may include a plurality of pixel areas P corresponding to the plurality of pixels and a plurality of opening areas O between the plurality of pixel areas. A first transmittance of the plurality of pixel areas and a second transmittance of the plurality of opening areas may differ from each other.

In various embodiments, a difference between the first transmittance and the second transmittance may be 15% or more for light having a wavelength of 550 nm.

In various embodiments, the coating layer 620 may include a porous layer having a plurality of pores 621 formed therein.

In various embodiments, the coating layer 720 may include a bumpy structure in which a plurality of protrusions 740 are formed.

In various embodiments, a refractive index of the coating layer is gradually changed from a surface in contact with air toward a surface in contact with the lens surface.

In various embodiments, the coating layer may be formed such that an average reflectance on the lens surface with the coating layer formed thereon is 0.25% or less for light having a wavelength range of 480 nm to 630 nm.

In various embodiments, the coating layer may be formed such that a maximum reflectance on the lens surface with the coating layer formed thereon is 0.35% or less for light having a wavelength range of 480 nm to 630 nm.

In various embodiments, the coating layer may be formed such that a reflectance deviation on the lens surface with the coating layer formed thereon is 0.25% or less for light having a wavelength range of 450 nm to 630 nm.

A camera module 500 according to an embodiment of the disclosure may include a plurality of lenses 570 and an image sensor 591 aligned with the plurality of lenses in a direction of an optical axis OA. A reference area 571 and 573 that serves as a criterion for a coating condition for formation of a coating layer 579 on lens surfaces of the plurality of lenses may be defined for the plurality of lenses. The reference area may include a first reference area 571 that overlaps a minimum effective diameter of the lens surfaces of the plurality of lenses in the direction of the optical axis and a second reference area 573 having the same center as the first reference area and having a diameter 0.5 times a diameter of the first reference area. The lens surfaces of the plurality of lenses may be configured such that the coating layer is formed when an angle of slope A1 to A6 formed by each of the lens surfaces with a normal line perpendicular to the optical axis satisfies a specified coating condition. The coating condition may include a first coating condition including Conditional Expression 1 and Conditional Expression 2 and a second coating condition including Conditional Expression 3 and Conditional Expression 4. The coating layer may be formed on the lens surface that satisfies at least one of the first coating condition or the second coating condition.

Conditional Expression 1

$$-10° \leq AS1 \leq 10°$$

Conditional Expression 2

$$-5° \leq AS2 \leq 5°$$

Conditional Expression 3

$$ED \geq 1.5 \times RaD$$

Conditional Expression 4

$$15° \leq AS3 \leq 40°$$

Here, "AS1" represents the angle of slope of a partial area of the lens surface located in the first reference area, "AS2" represents the angle of slope of a partial area of the lens surface located in the second reference area, "ED" represents an effective diameter of the lens surface, "RaD" represents the diameter of the first reference area, and "AS3" represents the angle of slope of a partial area of the lens surface located between an area whose diameter is 0.7 times the effective diameter and an area whose diameter is 0.85 times the effective diameter.

In various embodiments, the angle of slope may be defined as an angle that faces the optical axis and that is formed by a tangent line TL1 to TL6 that passes through one point P1 to P6 of the lens surface and a normal line NL that extends perpendicular to the optical axis while passing through the one point. The angle of slope formed in a first direction toward the image sensor (e.g., the second optical axis direction ②) with respect to the normal line may have a positive (+) sign, and the angle of slope formed in a direction opposite to the first direction with respect to the normal line may have a negative (-) sign.

In various embodiments, the plurality of lenses may include a first lens 510 located closest to an object OBJ. The first lens may include a first lens surface 511 that faces toward the object and a second lens surface 513 that faces toward the image sensor. The coating layer may be formed on the first lens surface when the first lens surface satisfies at least one of the first coating condition, the second coating condition, or Conditional Expression 5.

### Conditional Expression 5

$$TTL/ImgD \leq 0.65$$

Here, "TTL" represents a distance between a center of the first lens surface and the image sensor, the distance being measured in the direction of the optical axis, and "ImgD" represents a length of a diagonal line of the image sensor.

The electronic device 300 according to an embodiment of the disclosure may include a housing 310 including a front surface 310A, a rear surface 310B facing opposite to the front surface, and a side surface 310C surrounding between the front surface and the rear surface; and a camera module 393 or 500 disposed within the housing and configured to receive light through at least a portion of the rear surface (e.g., a rear camera area 384 of FIG. 4). The camera module may include a plurality of lenses 570 and an image sensor 591 aligned with the plurality of lenses in an optical axis OA direction. At least one of the plurality of lenses may include an anti-reflection coating layer 579 formed on all or part of a lens surface.

In various embodiments, a refractive index of the anti-reflection coating layer is gradually changed from a surface in contact with air toward a surface in contact with the lens surface.

In various embodiments, an average reflectance on the lens surface with the anti-reflection coating layer formed thereon is 0.25% or less for light having a wavelength range of 480 nm to 630 nm.

In various embodiments, a maximum reflectance on the lens surface with the anti-reflection coating layer formed thereon is 0.35% or less for light having a wavelength range of 480 nm to 630 nm.

In various embodiments, a reflectance deviation on the lens surface with the anti-reflection coating layer formed thereon is 0.25% or less for light having a wavelength range of 450 nm to 630 nm.

In various embodiments, the anti-reflection coating layer 620 may include a porous layer having a plurality of pores 621 formed therein.

In various embodiments, the anti-reflection coating layer 720 may include a bumpy structure in which a plurality of protrusions 740 are formed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play-Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device comprising:

   a display including a panel layer in which a plurality of pixels are disposed; and
   a camera module disposed under the display, wherein the camera module includes an image sensor and a plurality of lenses, and an optical axis of the plurality of lenses passes through the panel layer,
   wherein each of the plurality of lenses includes lens surfaces disposed to face toward the display and the image sensor, respectively,
   wherein a coating layer, which lowers reflectance, is formed on a lens surface of the plurality of lenses when an angle of slope of a partial area of the lens surface is within a specified range, and
   wherein the angle of slope is an angle formed by the lens surface with a normal line perpendicular to the optical axis.

2. The electronic device of claim 1, wherein a reference area, based on which a coating condition for formation of the coating layer is determined, is defined for the plurality of lenses,

   wherein the reference area includes a first reference area defined by an area overlapping a minimum effective diameter of lens surfaces of the plurality of lenses in a direction of the optical axis and a second reference area defined by an area having a same center as the first reference area and having a diameter 0.5 times a diameter of the first reference area,
   wherein the coating condition includes a first coating condition defined by the following conditional expressions:

$$-10° \leq AS1 \leq 10°;$$

   and

$$-5° \leq AS2 \leq 5°,$$

   wherein in the conditional expressions of the first coating condition, "AS1" represents the angle of slope of a partial area of the lens surface located in the first reference area, and "AS2" represents the angle of slope of a partial area of the lens surface located in the second reference area, and
   wherein the coating layer is disposed on a lens surface satisfying the first coating condition.

3. The electronic device of claim 2, wherein the coating condition further includes a second coating condition defined by the following conditional expressions:

$$ED \geq 1.5 \times RaD;$$

and

$$15° \leq AS3 \leq 40°,$$

wherein in the conditional expressions of the second coating condition, "ED" represents an effective diameter of the lens surface, "RaD" represents the diameter of the first reference area, and "AS3" represents the angle of slope of a partial area of the lens surface located between an area whose diameter is 0.7 times the effective diameter and an area whose diameter is 0.85 times the effective diameter, and wherein the coating layer is disposed on a lens surface satisfying at least one of the first coating condition or the second coating condition.

4. The electronic device of claim 1, wherein the angle of slope is defined as an angle defined to face the optical axis and formed by a tangent line defined to pass through one point of the lens surface and a normal line defined to extend perpendicular to the optical axis while passing through the one point.

5. The electronic device of claim 4, wherein the tangent line defined to pass through a first point of the lens surface passes through a first intersection on the optical axis, and the normal line perpendicular to the optical axis passes through a second intersection on the optical axis, and wherein the angle of slope corresponding to the first point is an included angle between a first line segment defined to connect the first point and the first intersection and a second line segment defined to connect the first point and the second intersection in a triangle having the first point, the first intersection, and the second intersection as vertexes thereof.

6. The electronic device of claim 4, wherein the angle of slope formed in a direction toward the image sensor with respect to the normal line has a positive (+) sign, and wherein the angle of slope formed in a direction toward the display or an object with respect to the normal line has a negative (-) sign.

7. The electronic device of claim 1, wherein the plurality of lenses include at least three lenses sequentially disposed one on another along the optical axis in a direction from the display to the image sensor.

8. The electronic device of claim 1, wherein the plurality of lenses include a first lens located closest to the display or an object,

wherein the first lens includes a first lens surface facing toward the display or the object and a second lens surface facing toward the image sensor, and wherein the coating layer is disposed on an entire area or a partial area of the first lens surface with respect to a first lens surface satisfying a third coating condition defined by the following conditional expression:

$$TTL/ImgD \leq 0.65,$$

wherein in the conditional expression of the third coating condition, "TTL" represents a distance between a center of the first lens surface and the image sensor, which is measured in a direction of the optical axis, and "ImgD" represents a length of a diagonal line of the image sensor.

9. The electronic device of claim 1, wherein the display includes a first area overlapping a field of view of the camera module and a second area around the first area, and wherein an arrangement density of the plurality of pixels in the first area is lower than an arrangement density of the plurality of pixels in the second area.

10. The electronic device of claim 9, wherein the first area, when the display is viewed from above, includes a plurality of pixel areas corresponding to the plurality of pixels and a plurality of opening areas between the plurality of pixel areas, and wherein a first transmittance of the plurality of pixel areas and a second transmittance of the plurality of opening areas differ from each other.

11. The electronic device of claim 10, wherein a difference between the first transmittance and the second transmittance is 15% or more for light having a wavelength of 550 nm.

12. The electronic device of claim 1, wherein the coating layer includes a porous layer in which a plurality of pores are formed.

13. The electronic device of claim 1, wherein the coating layer includes a bumpy structure in which a plurality of protrusions are formed.

14. The electronic device of claim 1, wherein a refractive index of the coating layer is gradually changed from a surface in contact with air toward a surface in contact with the lens surface.

15. The electronic device of claim 1, wherein an average reflectance on the lens surface with the coating layer formed thereon is 0.25% or less for light having a wavelength range of 480 nm to 630 nm.

100

ELECTRONIC DEVICE 101

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

INPUT MODULE 150

DISPLAY MODULE 160

SOUND OUTPUT MODULE 155

BATTERY 189

PROCESSOR 120

MAIN PROCESSOR 121

AUXILIARY PROCESSOR 123

POWER MANAGEMENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

NETWORK 199

ELECTRONIC DEVICE 104

198

ELECTRONIC DEVICE 102

SERVER 108

FIG.1

200

CAMERA MODULE 180

FLASH 220

IMAGE SENSOR 230

LENS ASSEMBLY 210

IMAGE STABILIZER 240

MEMORY 250

IMAGE SIGNAL PROCESSOR 260

FIG.2

300

305

301 306

310A

318

317

302

310
310C

310D

303 308

307

Z
Y
X

310A
310 310B
310C 310D
310E

FIG.3A

300

312  313

304

311

310B

310E

307
308  303

X  Y

Z

310A
310  310B
310C  310D
310E

FIG.3B

FIG.4

FIG.5

FIG.6

FIG.7

FIG.8

FIG.9A

F I G . 9 B

FIG.10A

FIG.10B

500

579

511

OA

①

580

510

520

530

540

570

550

560

②

579

561

563

579

FIG.11

600

610a

610

620

610a 610

621 623

620

610

610a

FIG.12A

700

720

<701>

710

<703>

730

720

710

<709>

740

720

710

710

<707>

730  740  710  720

<705>

730

720

710

FIG.12B

# INTERNATIONAL SEARCH REPORT

| | International application No. |
|---|---|
| | **PCT/KR2022/011387** |

### A. CLASSIFICATION OF SUBJECT MATTER

**H04N 5/225**(2006.01)i; **H04M 1/02**(2006.01)i; **G02B 1/11**(2006.01)i; **G02B 7/02**(2006.01)i

According to International Patent Classification (IPC) or to both national classification and IPC

### B. FIELDS SEARCHED

Minimum documentation searched (classification system followed by classification symbols)

H04N 5/225(2006.01); G02B 13/00(2006.01); G02B 5/00(2006.01); G02B 5/20(2006.01); G02B 7/02(2006.01); G03B 21/14(2006.01); G06F 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 렌즈(lens), 이미지 센서(image sensor), 광 축(optical axis), 경사 각(angle of slope), 코팅(coating)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0117137 A (SAMSUNG ELECTRONICS CO., LTD.) 14 October 2020 (2020-10-14)<br>See paragraphs [0024], [0047], [0062]-[0063] and [0078]; claim 1; and figures 1-5 and 8. | 1,7,9-15 |
| A | | 2-6,8 |
| Y | JP 2020-140115 A (FUJIFILM CORP.) 03 September 2020 (2020-09-03)<br>See paragraphs [0010] and [0033]; and claims 1-2. | 1,7,9-15 |
| A | KR 10-2020-0068924 A (SAMSUNG ELECTRONICS CO., LTD.) 16 June 2020 (2020-06-16)<br>See paragraphs [0007]-[0015]; and claims 1-10. | 1-15 |
| A | KR 10-2021-0015160 A (HM WORKS INC. et al.) 10 February 2021 (2021-02-10)<br>See paragraphs [0009]-[0016]; and claims 1-7. | 1-15 |
| A | JP 2017-198940 A (CANON INC.) 02 November 2017 (2017-11-02)<br>See paragraphs [0007]-[0008]; and claims 1-8. | 1-15 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 November 2022** | **16 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| | | | | | | | International application No.<br>**PCT/KR2022/011387** |

| Patent document<br>cited in search report | | | Publication date<br>(day/month/year) | Patent family member(s) | | | Publication date<br>(day/month/year) |
|---|---|---|---|---|---|---|---|
| KR | 10-2020-0117137 | A | 14 October 2020 | CN | 111800559 | A | 20 October 2020 |
| | | | | EP | 3719610 | A1 | 07 October 2020 |
| | | | | US | 2020-0319682 | A1 | 08 October 2020 |
| | | | | WO | 2020-204360 | A1 | 08 October 2020 |
| JP | 2020-140115 | A | 03 September 2020 | CN | 211506005 | U | 15 September 2020 |
| | | | | US | 11067876 | B2 | 20 July 2021 |
| | | | | US | 2020-0278594 | A1 | 03 September 2020 |
| KR | 10-2020-0068924 | A | 16 June 2020 | CN | 111290102 | A | 16 June 2020 |
| | | | | EP | 3663830 | A1 | 10 June 2020 |
| | | | | US | 2020-0183128 | A1 | 11 June 2020 |
| | | | | WO | 2020-116922 | A1 | 11 June 2020 |
| KR | 10-2021-0015160 | A | 10 February 2021 | | None | | |
| JP | 2017-198940 | A | 02 November 2017 | CN | 109073784 | A | 21 December 2018 |
| | | | | CN | 109073784 | B | 28 July 2020 |
| | | | | JP | 6843520 | B2 | 17 March 2021 |
| | | | | US | 11067722 | B2 | 20 July 2021 |
| | | | | US | 2019-0137662 | A1 | 09 May 2019 |
| | | | | WO | 2017-188010 | A1 | 02 November 2017 |

Form PCT/ISA/210 (patent family annex) (July 2022)